# EUROPEAN PATENT APPLICATION

(11) **EP 4 686 263 A1**
(43) Date of publication of application: **28.01.2026**
(21) Application number: 24216285.7
(22) Date of filing: 28.11.2024
(51) Int. Cl.: H04W 40/24, H04W 40/32, H04W 84/18

(54) **METHOD AND DEVICE FOR ADAPTIVE MESH NETWORK CONFIGURATION**

(30) Priority: 26.07.2024 AU 2024902332
(71) Applicant: Morse Micro Pty. Ltd., Surry Hills, NSW 2010 (AU)
(72) Inventor: REDDY, Pradeep, Surry Hills, NSW 2010 (AU); BUSSA, Sagar, Surry Hills, NSW 2010 (AU)
(74) Representative: MERH-IP Matias Erny Reichl Hoffmann Patentanwälte PartG mbB

(57) **Abstract**

Systems and techniques are provided for performing wireless communications. In some aspects, a first mesh node configured with a root mesh node role can broadcast a root announcement frame at a configured time interval to announce a presence of the first mesh node as a root mesh node of a mesh network. The first mesh node can receive a plurality of path reply messages from mesh peers in the mesh network, each path reply message responsive to a corresponding path request message. Updated condition information of the mesh network can be determined based on the plurality of path reply messages. The first mesh node can be configured with a non-root mesh node role or can maintain the root mesh node role, wherein the configuration of the first mesh node with the non-root or root mesh node role is determined based on the updated condition information of the mesh network.

## Description

### FIELD

The present disclosure generally relates to wireless communications. For example, aspects of the present disclosure are related to adaptive configuration of a wireless mesh network (WNIN) and/or one or more root mesh nodes of a WMN.

### BACKGROUND

A Wireless Mesh Network (WMN) is a communication network that includes a plurality of radio nodes organized in a mesh topology. A mesh topology can be based on rich interconnections among nodes, where each node of the mesh topology is connected to one or more other nodes of the mesh topology. In the context of a WMN, a mesh topology between the plurality of radio nodes enables multiple different pathways to be taken between a source and a destination. In some examples, a WMN may typically be implemented as a low-mobility wireless ad-hoc network. Mesh infrastructure can be used to carry data over long distances by splitting each distance into a series of short hops, where intermediate nodes cooperatively pass data from one node to another by making forwarding decisions based on each intermediate node's knowledge of the network and/or the underlying mesh topology. For example, using knowledge of the network and/or underlying mesh topology, every node in the network could dynamically serve as a router for every other node.

An example of a WMN is an Institute of Electrical and Electronics Engineers (IEEE) 802.11s mesh network, where the IEEE 802.11s wireless mesh networking standard defines the interconnection between multiple wireless devices to create a Wireless Local Area Network (WLAN) mesh network. A wireless mesh network device, also known as a Mesh Station (mesh STA) or a mesh node, forms mesh links with one or more additional mesh STAs that are associated with the WMN. Using the plurality of mesh links that interconnect various pairs of mesh STAs that are included in the WMN, mesh paths can be established using an ad-hoc mobile routing protocol (e.g., a mesh path can comprise a plurality of mesh links between interconnected mesh STAs or nodes of the WMN).

The multi-hop wireless links in the mesh architecture can be used to enable the routing of packets from one node (e.g., a source node on the WMN) through one or more other nodes (e.g., intermediate nodes, also on the WMN) towards the destination node (e.g., a destination node, also on the WMN). The IEEE 802.1 1s mesh standard mandates every node in the mesh network to transmit a beacon at every beacon interval. This beacon can also be referred to as a mesh beacon, and advertises a mesh ID, mesh profile, and power save state. The IEEE 802.11s mesh beacons are intended for discovery of mesh networks and synchronization among mesh nodes when the mesh power save mode is enabled. Mesh networks operating on sub-gigahertz (S1G) frequency bands (e.g., frequencies of 1 GHz or less) have the advantage of long-range wireless communication and improved fault tolerance, compared to infrastructure networks. For example, the license-free frequency bands under one GigaHertz (GHz) can be used for wireless communications between mesh nodes in a mesh network.

### BRIEF SUMMARY

The following presents a simplified summary relating to one or more aspects disclosed herein. Thus, the following summary should not be considered an extensive overview relating to all contemplated aspects, nor should the following summary be considered to identify key or critical elements relating to all contemplated aspects or to delineate the scope associated with any particular aspect. Accordingly, the following summary has the sole purpose to present certain concepts relating to one or more aspects relating to the mechanisms disclosed herein in a simplified form to precede the detailed description presented below.

Disclosed are systems, methods, apparatuses, and computer-readable media for performing wireless communication over a wireless communication network such as a Wireless Local Area Network (WLAN). According to at least one illustrative example, a method of wireless communication over a wireless mesh network is provided. For example, an adaptive root mesh configuration method for a first mesh node in a mesh network can include: broadcasting, by the first mesh node, a root announcement frame at a configured time interval, wherein the root announcement frame is used to announce a presence of the first mesh node as a root mesh node of the mesh network, based on a configuration of the first mesh node with a root mesh node role for the mesh network; receiving, by the first mesh node, a plurality of path reply messages from one or more mesh peers in the mesh network, wherein each path reply message of the plurality of path reply messages is responsive to a corresponding path request message; determining updated condition information of the mesh network based on the plurality of path reply messages; and configuring the first mesh node with a non-root mesh node role or configuring the first mesh node to maintain the root mesh node role, wherein the configuration of the first mesh node with the non-root or root mesh node role is determined based on the updated condition information of the mesh network.

In another illustrative example, a first mesh node in a mesh network is provided, the first mesh node comprising: a radio frequency (RF) receiver and an RF transmitter; a processor, communicatively coupled to the RF receiver and the RF transmitter; and one or more memory banks, communicatively coupled to the processor and storing processor readable instructions that, when executed by the processor, causes the processor to perform actions comprising: broadcasting a root announcement frame by the RF transmitter at a configured time interval, wherein the root announcement frame is used to announce a presence of the first mesh node as a root mesh node of the mesh network, based on a configuration of the first mesh node with a root mesh node role for the mesh network; receiving, by the RF receiver, a plurality of path reply messages from one or more mesh peers in the mesh network, wherein each path reply message of the plurality of path reply messages is responsive to a corresponding path request message; determining updated condition information of the mesh network based on the plurality of path reply messages; and configuring the first mesh node with a non-root mesh node role or configuring the first mesh node to maintain the root mesh node role, wherein the configuration of the first mesh node with the non-root or root mesh node role is determined based on the updated condition information of the mesh network.

Other objects and advantages associated with the aspects disclosed herein will be apparent to those skilled in the art based on the accompanying drawings and detailed description.

### BRIEF DESCRIPTION OF THE DRAWINGS

Illustrative aspects of the present application are described in detail below with reference to the following drawing figures:
FIG. 1 is a block diagram illustrating an exemplary wireless communication network;
FIG. 2A is a block diagram of a wireless communication device that can implement a station (STA) or access point (AP), in accordance with some embodiments;
FIG. 2B is a schematic block diagram of the receiver data flow architecture of the wireless communication device of FIG. 2A, in accordance with some embodiments;
FIG. 2C is a schematic block diagram of a transmitter data flow architecture that can be used to transmit Radio Frequency (RF) signals over a wireless medium, in accordance with some embodiments;
FIG. 3 is a diagram illustrating an example of a mobile mesh node moving away from a first mesh network associated with a first mesh Basic Service Set (BSS) and towards a second mesh network associated with a second mesh BSS, in accordance with some embodiments;
FIG. 4 is a signaling diagram illustrating an example of mesh peering signaling between a first and second mesh node, in accordance with some embodiments;
FIG. 5 is a signaling diagram illustrating an example of adaptive mesh peering performed by a mesh STA when a new peer is found after reaching capacity on a maximum number of peer links, in accordance with some embodiments;
FIG. 6 is a diagram illustrating an example of adaptive root mesh node management for an MBSS that includes multiple root mesh nodes or STAs, in accordance with some embodiments;
FIG. 7 is a flow diagram of an example process for adaptive root mesh configuration for a first mesh node in a mesh network, in accordance with some embodiments; and
FIG. 8 is a block diagram illustrating an example of a computing system for implementing certain aspects described herein, in accordance with some embodiments.

### DETAILED DESCRIPTION

Certain aspects of this disclosure are provided below. Some of these aspects may be applied independently and some of them may be applied in combination as would be apparent to those of skill in the art. In the following description, for the purposes of explanation, specific details are set forth in order to provide a thorough understanding of aspects of the application. However, it will be apparent that various aspects may be practiced without these specific details. The figures and description are not intended to be restrictive.

The ensuing description provides example aspects only, and is not intended to limit the scope, applicability, or configuration of the disclosure. Rather, the ensuing description of the example aspects will provide those skilled in the art with an enabling description for implementing an example aspect. It should be understood that various changes may be made in the function and arrangement of elements without departing from the spirit and scope of the application as set forth in the appended claims.

### OVERVIEW

As noted previously, wireless mesh networks (e.g., WMNs) are typically implemented as low-mobility wireless ad-hoc networks, where little to no mobility or movement is expected from the individual mesh nodes. For example, many existing approaches to WMNs, including IEEE 802.11s-based WMNs, are implemented with a static or semi-static deployment of the individual mesh nodes that form the mesh topology and interconnections with one another. In these static or semi-static deployments, individual mesh nodes do not change location or change location very infrequently. For example, a Wi-Fi mesh network in a user's home can correspond to a static or semi-static deployment of mesh nodes, based on the mesh nodes being positioned in a desired room in the home during setup and then remaining in the same location indefinitely.

When the locations of the individual mesh nodes of a WMN do not change, or else change infrequently, the list of interconnections maintained at each mesh node can also be expected to change infrequently, as the interconnections for a given mesh node comprise the other mesh nodes of the WMN that are within communication range of the given mesh node. Additionally, existing WMNs may also be implemented with an assumption that a given mesh node of a WMN will have a relatively small list of interconnections (e.g., a relatively low number of intermediate mesh nodes that are connected to/within range of the given mesh node).

Accordingly, many WMNs do not include or specify memory management techniques that can be used to reduce the memory overhead or memory storage footprint used by mesh nodes to maintain their respective connection list information. Moreover, WMNs that use a static or semi-static deployment typically utilize relatively robust and/or full-featured devices as the mesh nodes, and the memory overhead associated with storing the mesh connection information (e.g., encryption keys for every other node to which a given mesh node is connected and/or other mesh connection information stored in low-memory on-chip RAM configured for the storage of keys such as unicast and broadcast keys per link, etc.) may be relatively low.

For Internet of Things (IoT) devices and/or other low-power wide area networking (LPWAN) technologies, the assumptions made by existing techniques and standards for implementing wireless mesh networking (e.g., the assumptions of negligible hardware memory limitations and low mobility of mesh nodes) are often no longer applicable. For example, the basic communication requirements in many IoT applications, devices, deployments, etc., can often include low device complexity levels and high device mobility levels, to better support the large-scale realization of city-scale IoT applications and/or interconnections between thousands of individual IoT devices. Implementing a WNIN for a plurality of low complexity and/or high mobility devices configured as the mesh nodes can quickly run into the hardware memory limits of the devices - as high mobility causes the devices to frequently "see" and store connection information for a new arrangement of other mesh node devices, while the low complexity (e.g., low memory) nature of the devices accelerates the speed at which the on-device memory reaches maximum capacity. Examples of low complexity and high mobility wireless devices can include IoT devices, LPWAN devices, and/or Wi-Fi HaLow devices (e.g., operating in line with the IEEE 802.1 1ah standard over 900 MHz or other S1G license-exempt bands to provide extended-range and lower-power Wi-Fi networks), among various others.

There is a need for systems and techniques that can be used to provide adaptive mesh network configuration that can be used by mesh nodes of a WMN to adaptively accept (or deny) peering requests from other mesh nodes, for example based on analyzing or determining a signal quality of the received signal carrying the peering request. By adaptively accepting only the strongest connection strength peering requests, the memory footprint of maintaining the mesh connection/interconnection information at each individual mesh node can be reduced. There is also a need for systems and techniques that can be used to provide adaptive mesh network configuration that can be used by mesh nodes of a WMN to adaptively terminate established peering with other mesh nodes, for example based on an associated signal quality falling below a configured threshold. By adaptively terminating low connection strength peering, the memory footprint of maintaining the mesh connection/interconnection information at each individual mesh node can also be reduced.

Disclosed are systems, methods, apparatuses, and computer-readable media (collectively, "systems and techniques") that provide novel and effective methods of adaptive mesh network configuration. For example, in some embodiments, an adaptive mesh peering method for a first mesh node in a mesh network includes receiving a signal from a second mesh node, determining a signal quality of the received signal, and adaptively accepting a peering request from the second mesh node according to the signal quality of the received signal. In some embodiments, the first mesh node can also adaptively terminate an established peering with the second mesh node according to the signal quality of the received signal. An embodiment of the signal quality of the received signal is a Received Signal Strength Indicator (RSSI) of the received signal. For example, the first mesh node terminates the established peering with the second mesh node when a third mesh node's RSSI of the received signal is better than that of the second mesh node by a configured (e.g., predefined) RSSI margin.

Another embodiment of the signal quality of the received signal is a Packet Error Rate (PER), and the adaptive mesh peering method may further comprise calculating the PER of the established link. The PER is calculated based on a number of packets lost out of a number of packets sent. For example, the first mesh node terminates the established peering with the second mesh node when the PER of the link is above a predetermined PER threshold. In an embodiment, the adaptive mesh peering method considers both the RSSI and PER of the link for establishing peering or terminating peering. For example, the first mesh node terminates the established peering with the second mesh node when the PER of the link is above a predetermined PER threshold and the RSSI is below a predetermined RSSI threshold. In some embodiments, the first mesh node blacklists the second mesh node for a timeout period when the signal quality of the received signal is below an expected quality level. In some aspects, the first mesh node can be configured to terminate the established peering when the signal quality of a received signal from the second mesh node is still below the expected quality level after timeout. In one illustrative example, the timeout for blacklisting may be started after termination of the peering.

An aspect of the invention provides a first mesh node comprising a Radio Frequency (RF) receiver and RF transmitter, a processor communicatively coupled to the RF receiver and RF transmitter, and one or more memory banks communicatively coupled to the processor for storing processor readable codes. The first mesh node is configured to receive a signal from a second mesh node by the RF receiver, determine a signal quality of the received signal, and accept a peering request from the second mesh node or terminate an established peering with the second mesh node according to the signal quality of the received signal.

Another aspect of the invention corresponds to an adaptive root mesh configuration method for a first mesh node in a mesh network. Some embodiments of the adaptive root mesh configuration method comprise generating and broadcasting a root announcement frame at regular intervals to announce a presence of the first mesh node, receiving path replies sent by mesh peers in the mesh network (e.g., path replies sent in response to path request frames, which can be used to populate and/or update a path table of the mesh node), updating a condition of the mesh network according to the path replies, and configuring to be a normal mesh node or maintaining as a root mesh node according to the updated condition of the mesh network. The first mesh node keeps generating and broadcasting the root announcement frame at the regular intervals if it is maintained as a root mesh node in the mesh network, or the first mesh node stops generating or broadcasting the root announcement frame if it is configured to be a normal mesh node.

In some embodiments, the condition of the mesh network includes a number of peer mesh nodes directly connected to the first mesh node, a number of root mesh nodes directly connected to the first mesh node, or both the number of directly connected peer mesh nodes and the directly connected root mesh nodes. For example, the first mesh node is configured to be a normal mesh node when the number of peer mesh nodes directly connected to the first mesh node is below a threshold and the number of root mesh nodes directly connected to the first mesh node is at least one. In another example, the first mesh node is configured to be a normal mesh node when the number of root mesh nodes directly connected is at least one. In one example, the first mesh node is maintained as a root mesh node when the number of peer mesh nodes directly connected to the first mesh node is above a threshold and the number of root mesh nodes directly connected to the first mesh node is zero.

An aspect of the invention provides a first mesh node in a mesh network comprising an RF receiver, an RF transmitter, a processor, and one or more memory banks communicatively coupled to the processor for storing processor readable codes. The first mesh node is configured to generate and broadcast a root announcement frame by the RF transmitter at regular intervals to announce a presence of the first mesh node, receive path replies sent by mesh peers in the mesh network by the RF receiver, update a condition of the mesh network according to the path replies, and configure to be a normal mesh node or maintain as a root mesh node according to the updated condition of the mesh network. The first mesh node keeps generating and broadcasting the root announcement frame at the regular intervals when maintained as a root mesh node, or the first mesh node stops generating or broadcasting the root announcement frame when configured to be a normal mesh node.

### EXAMPLE EMBODIMENTS

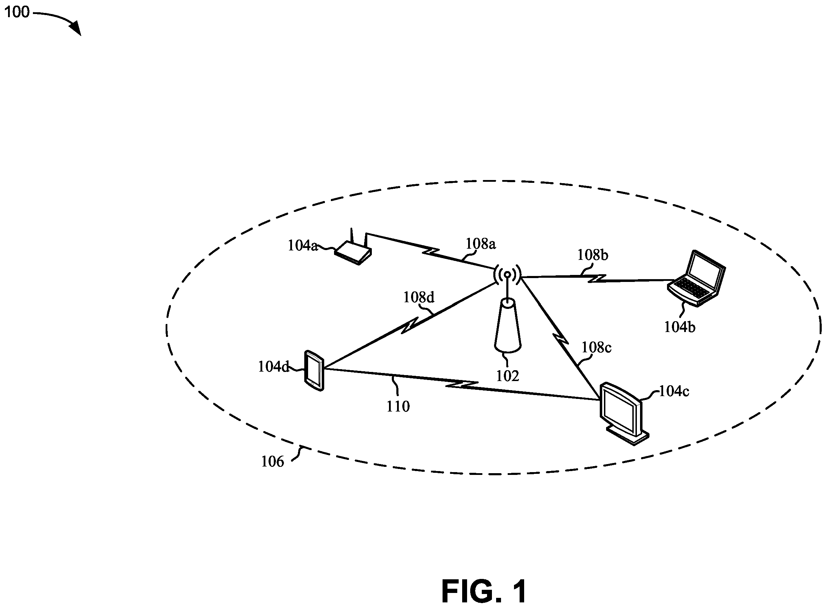

FIG. 1 is a block diagram illustrating an exemplary wireless communication network 100. In some aspects, the wireless communication network 100 can be an example of a Wireless Local Area Network (WLAN). As used herein, a WLAN may be a Wi-Fi network. In some examples, the WLAN 100 can be a network implementing at least one of the IEEE 802.11 family of wireless communication protocol standards (e.g., such as that defined by the IEEE 802.11-2020 specification or amendments thereof including, but not limited to, 802.11ah, 802.11ay, 802.11ax, 802.11az, 802.11ba and 802.11be). The WLAN 100 may include at least one AP 102 and multiple associated STAs 104. For example, the STAs 104 can include a first STA 104a, a second STA 104b, a third STA 104c, a fourth STA 104d, etc. While only one AP 102 is shown, the WLAN network 100 also can include multiple APs 102.

Each of the STAs 104a-104d may be referred to as a Mobile Station (MS), a mobile device, a mobile handset, a wireless handset, an Access Terminal (AT), a User Equipment (UE), a Subscriber Station (SS), and/or a subscriber unit, among other examples. The STAs 104 may represent various devices such as mobile phones, handheld devices, netbooks, computers, tablet computers, laptops, display devices (e.g., TVs, computer monitors, navigation systems, etc.), music or other audio or stereo devices, remote control devices ("remotes"), printers, kitchen or other household appliances, key fobs (e.g., for Passive Keyless Entry and Start (PKES) systems), etc.

A single AP 102 and an associated set of STAs 104a-104d may be referred to as a Basic Service Set (BSS), which is managed by the respective AP 102. FIG. 1 additionally shows an example coverage area 106 of the AP 102, which may represent a Basic Service Area (BSA) of the WLAN 100. The BSS may be identified to users by a Service Set Identifier (SSID), as well as to other devices by a Basic Service Set Identifier (BSSID), which may be a Medium Access Control (MAC) address of the AP 102.

The AP 102 periodically broadcasts beacon frames ("beacons") including the BSSID to enable any STAs (e.g., such as one or more, or all, of the STAs 104a-104d) within wireless range of the AP 102 to associate or re-associate with the AP 102 to establish a respective communication link 108a-108d (e.g., hereinafter also referred to as a "Wi-Fi link"). For example, the first STA 104a can establish a respective communication link 108a with the AP 102, the second STA 104b can establish a respective communication link 108b with the AP 102, the third STA 104c can establish a respective communication link 108c with the AP 102, the fourth STA 104d can establish a respective communication link 108d with the AP 102, etc. The STAs 104a-104d may additionally use the beacon frames broadcast by AP 102 to maintain the respective communication link 108a-108d with the AP 102. For example, the beacons can include an identification of a primary channel used by the respective AP 102 as well as a timing synchronization function for establishing or maintaining timing synchronization with the AP 102. The AP 102 may provide access to external networks to various STAs in the WLAN via respective communication links 108.

To establish the communication links 108a-108d with an AP 102, each of the respective STAs 104a-104d can perform passive or active scanning operations ("scans") on frequency channels in one or more frequency bands. For example, to perform passive scanning, each of the STAs 104a-104d listens for beacons that are transmitted by the AP 102 at a periodic time interval referred to as the Target Beacon Transmission Time (TBTT). The TBTT can be measured in Time Units (TUs). In some examples, one TU may be equal to 1024 microseconds (µs). In some examples, the TBTT can have a default value of 102.4 milliseconds (ms). To perform active scanning, each of the STAs 104a-104d can generate probe requests on each channel to be scanned and listens for probe responses from the AP 102. Each of the STAs 104a-104d may be configured to identify or select an AP 102 with which to associate (e.g., based on the scanning information obtained through the passive or active scans), and to perform authentication and association operations to establish a respective communication link 108a-108d with the selected AP 102. The AP 102 assigns an Association Identifier (AID) to each of the STAs 104a-104d at the culmination of the association operations, which the AP 102 uses to track the STAs 104a-104d.

In some cases, one or more of the STAs 104a-104d may have the opportunity to select one of many BSSs within range of the STA or to select among multiple APs 102 that together form an Extended Service Set (ESS) including multiple connected BSSs. An extended network station associated with the WLAN 100 may be connected to a wired or wireless distribution system that may allow multiple APs 102 to be connected in an ESS. In some examples, one or more of the STAs 104a-104d can be covered by more than one AP 102 and can associate with different APs 102 at different times for transmissions. After association with an AP 102, one or more of the STAs 104a-104d also may be configured to periodically scan its surroundings to find a more suitable AP with which to associate. For example, a given one of the STAs 104a-104d that is moving away from its associated AP 102 may perform a "roaming" scan to find another AP having more desirable network characteristics (e.g., such as a greater Received Signal Strength Indicator (RSSI), a reduced traffic load, etc.).

In some cases, the STAs 104a-104d may form networks without APs 102 or other equipment other than the STAs 104a-104d themselves. One example of such a network is an ad hoc network. Some examples of an ad hoc network are mesh networks and peer-to-peer (P2P) networks. In some cases, ad hoc networks may be implemented within a larger wireless network In such implementations, while the STAs 104a-104d may be capable of communicating with each other through the AP 102 using the respective communication links 108a-108d, the STAs 104a-104d, the STAs may also communicate directly with each other using direct wireless links 110. In some examples, two STAs may communicate via a direct communication link 110 regardless of whether both STAs 104 are associated with and served by the same AP 102. In such an ad hoc system, one or more of the STAs 104a-104d may assume the role filled by the AP 102 in a BSS. Such a STA may be referred to as a Group Owner (GO) and may coordinate transmissions within the ad hoc network. Examples of direct wireless links 110 can include one or more of Wi-Fi Direct connections, connections established by using a Wi-Fi Tunneled Direct Link Setup (TDLS) link, and other P2P group connections, etc.

The APs 102 and STAs 104a-104d may function and communicate using the respective communication links 108a-108d according to at least one of the IEEE 802.11 wireless communication protocol standards. These standards define the WLAN radio and baseband protocols for the physical (PHY) and Medium Access Control (MAC) layers. For example, the APs 102 and STAs 104a-104d transmit and receive wireless communications to and from one another in the form of PHY Protocol Data Units (PPDUs) or Physical Layer Convergence Protocol (PLCP) PDUs. The APs 102 and STAs 104a-104d in the WLAN 100 may transmit PPDUs over a license or unlicensed spectrum, which may be a portion of spectrum that includes frequency bands traditionally used by Wi-Fi technology, such as the 2.4 GHz band, the 5 GHz band, the 60 GHz band, the 3.6 GHz band, and the sub-1 GHz band. Some implementations of the APs 102 and STAs 104a-104d described herein also may communicate in other frequency bands, such as the 6 GHz band, which may support both licensed and unlicensed communications. The APs 102 and STAs 104a-104d also can be configured to communicate over other frequency bands such as shared licensed frequency bands, where multiple operators may have a license to operate in the same or overlapping frequency band or bands.

Each of the frequency bands may include multiple sub-bands or frequency channels. For example, PPDUs conforming to the IEEE 802.11 standards and specifications may be transmitted over frequency bands that are divided into multiple 20 MHz channels. In such examples, the PPDUs are transmitted over a physical channel having a minimum bandwidth of 20 MHz, although other channel bandwidths are also possible. In some cases, a larger bandwidth channel can be formed using channel bonding, which bonds together multiple channels each of the minimum bandwidth.

Each PPDU is a composite structure that includes a PHY preamble and a payload in the form of a PHY Service Data Unit (PSDU). The information provided in the preamble may be used by a receiving device to decode the subsequent data in the PSDU. In instances in which PPDUs are transmitted over a bonded channel, the preamble fields may be duplicated and transmitted in each of the multiple component channels. The PHY preamble may include both a legacy portion (or "legacy preamble") and a non-legacy portion (or "non-legacy preamble"). The legacy preamble may be used for packet detection, automatic gain control and channel estimation, among other uses. The legacy preamble also may generally be used to maintain compatibility with legacy devices. The format of, coding of, and information provided in the non-legacy portion of the preamble is based on the particular IEEE 802.11 protocol to be used to transmit the payload.

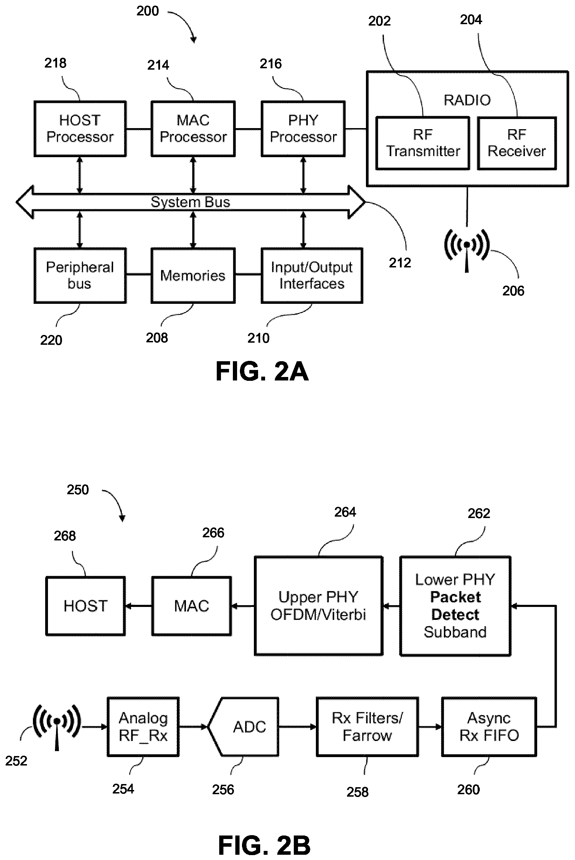

FIG. 2A is a high-level block diagram of an exemplary wireless communication device 200 that can be used to implement a STA or an AP, in some examples. The wireless communication device 200 can include a MAC layer and a PHY layer in accordance with one or more of the IEEE 802.11 standards.

The wireless communication device 200 includes a Radio Frequency (RF) transmitter module 202, an RF receiver module 204, an antenna unit 206, one or more memory banks 208, input and output interfaces 210, and communication bus 212. The RF transmitter module 202 and the RF receiver module 204 include a modem (modulator-demodulator device), which transmits data by modulating one or more carrier wave signals to encode digital information, as well as receives data by demodulating the signal to recreate the original digital information. As illustrated, the wireless communication device 200 further includes a MAC processor 214, a PHY processor 216 and a HOST processor 218. These processors can be any type of Integrated Circuit (IC) including a general processing unit, an Application Specific Integrated Circuit (ASIC) or Reduced Instruction Set Computer - Five (RISC-V) based ICs, amongst others.

The memory 208 can be used to store software and/or computer-readable instructions, including software or instructions that can be used to implement at least some functions of the MAC layer. For example, each processor included in the wireless communication device 200 (e.g., MAC processor 214, PHY processor 216, HOST processor 218, etc.) executes respective software to implement the functions of the respective communication/application layer.

The PHY processor 216 includes a transmitting signal processing unit and a receiving signal processing unit (not shown) and can be used to manage the interface with the Wireless Medium (WM). The PHY processor 216 operates on PPDUs by exchanging digital samples with the radio module which includes the RF transmitter 202, the RF receiver 204, analog-to-digital converters, and digital filters.

The MAC processor 214 executes MAC level instructions and manages the interface between the application software and the WM, through the PHY processor 216. The MAC processor 214 is responsible for coordinating access to the WM so that the Access Point (AP) and STAs in range can communicate effectively. The MAC processor 214 adds header and tail bytes to units of data provided by the higher levels and sends them to the PHY layer for transmission. The reverse happens when receiving data from the PHY layer. If a frame is received in error, the MAC processor 214 manages the retransmission of the frame.

The HOST processor 218 interfaces with the MAC layer and is responsible for running higher level functionalities of the wireless communication device.

The PHY processor 216, the MAC processor 214, the HOST processor 218, the peripheral bus 220, the memories 208, and the input/output interfaces 210 communicate with each other via the peripheral bus 212. The peripheral bus 220 connects to a number of peripherals that support core functions of the wireless communication device 200, including timers, interrupts, radio/filters/system registers, counters, UART, GPIO interfaces, among others. The memory 208 may further store an operating system and applications. In some examples, the memory may store recorded information about captured frames and packets. The input/output interface unit 210 allows for exchange of information with a user of the wireless communication device. The antenna unit 206 can include a single antenna and/or can include multiple antennas. For example, multiple antennas can be used to implement Multiple Input Multiple Output (MIMO) techniques, among others.

FIG. 2B illustrates a schematic block diagram of a receiver data flow architecture 250 that can be used to receive Wi-Fi packets over the network. In one illustrative example, the receiver data flow architecture 250 illustrated in FIG. 2B can correspond to or otherwise be associated with the wireless communication device 200 illustrated in FIG. 2A. Radio signals are received over the WM and translated into electrical signals by the receiving antenna 252 (e.g., which can be the same as or similar to antenna 206). The received signal is conditioned using a series of analog filters 254 (e.g., depicted as analog RF receive (Rx) filters) before being converted into a digital signal equivalent using an Analog-to-Digital Converter (ADC) 256. The sampled signal output of ADC 256 is conditioned again using a filter bank 258, which can include one or more digital RF filters and/or a farrow, before the samples are collected in an asynchronous receiving First-In-First-Out (FIFO) data structure 260.

Samples in FIFO structure 260 can be accessed by a plurality of modules. For example, samples can be accessed by a packet detect module and a sub-band module, both of which may be included in the lower-level PHY portion 262 depicted in FIG. 2B. In some embodiments, the lower-level PHY portion 262 is itself included in the PHY processor 216 illustrated in FIG. 2A.

The packet detect module included in the lower-level PHY portion 262 can include hardware and/or implement algorithms that can be used to analyze the initial sections of the PPDU in the time domain. Based on the analysis, the packet detect module can be used to recognize a received frame and synchronize frequency and timing of the wireless communication device with the packet being received. The sub-band module included in the lower-level PHY portion 262 can include hardware and/or implement algorithms that can be used to detect which subchannel in the allocated frequency band is being used for the packet being received.

Once a packet is detected and the relevant subchannel is established, samples can be forwarded to an upper-level PHY portion 264. The upper-level PHY portion 264 can be included in the PHY processor 216 illustrated in FIG. 2A. In some aspects, upper-level PHY portion 264 can be used to process and decode Orthogonal Division Multiplexing (OFDM) symbols (e.g., with the support of a coprocessor module) to reconstruct the full PPDU. The reconstructed PPDU is output by the upper-level PHY portion 264 and subsequently processed by the MAC layer processor 266. The MAC layer processor 266 can be used to extract the data payload from the PPDU and provide the relevant information to the HOST layer 268 for consumption.

In some examples, the MAC layer processor 266 illustrated in FIG. 2B can be the same as or similar to the MAC processor 214 illustrated in FIG. 2A. In some cases, the HOST layer 268 illustrated in FIG. 2B can include or otherwise can be the same as or similar to the HOST processor 218 illustrated in FIG. 2A.

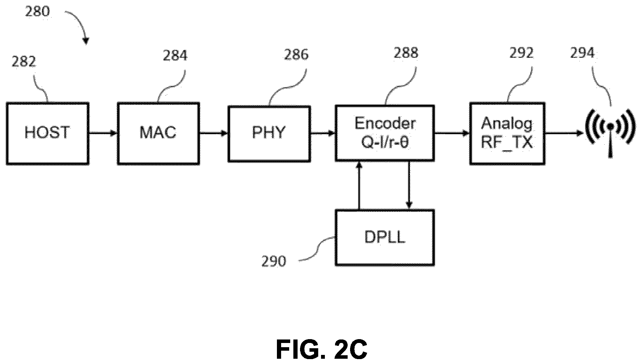

FIG. 2C is a schematic block diagram of a transmitter data flow architecture 280 that can be used to transmit RF signals over a wireless medium, in accordance with some examples. More particularly, FIG. 2C illustrates a simplified schematic block diagram of a transmitter data flow architecture 280 used for transmitting radio signals over a WM. Data can be generated from a HOST or APP module 282 and packaged in a MAC level Protocol Data Unit (MPDU) to be routed over the wireless network by the MAC management module 284. The PHY module 286 interfaces with the WM and compiles a PPDU by adding a PHY preamble and the tail to the MPDU. Usually a Modulation Coding Scheme (MCS) for transmission of the packet over the medium is established using a rate control algorithm by the MAC module 284 or the PHY module 286. The modulation scheme selected can define the modulation technique to be used to transmit the data on the WM and the coding rate. Based on the modulation scheme selected, for example Quadrature Amplitude Modulation (QAM) 64, the PPDU is modulated to be transmitted on the WM. The encoder module 288 generates signals corresponding to points of QAM constellation symbols (groups of bits of the PPDU) which can be encoded using polar (r-θ) or cartesian (Q-I) coordinates. The modulation is done by linking the encoder module 288 to a Digital Phase Lock Loop (DPLL) 290. The modulated signals may be filtered by analog filters 292 and transmitted using a transmitting antenna 294.

As noted previously, a wireless mesh network (WMN) can be provided as a communication network that includes a plurality of mesh nodes that are organized according to a mesh topology corresponding to the interconnections between the various mesh nodes. For example, each mesh node of the plurality of mesh nodes included in a WMN is connected to at least one additional mesh node of the WMN, and more typically each mesh node is connected to multiple additional mesh nodes of the WMN (e.g., each mesh node is typically connected to a subset of the plurality of mesh nodes of the WMN).

Mesh nodes communicate with each other by utilizing wireless routing, where data packets are transmitted through intermediate mesh nodes. A best path for data transmission can be dynamically found by a mesh routing algorithm such as a Hybrid Wireless Mesh Protocol (HWMP) used for IEEE 802.11s. A new path between a source-destination pair can be formed automatically when any mesh node is down, based on utilizing a different combination of the interconnection links between the constituent mesh nodes of the WMN/mesh topology. Mesh peering management and path discovery process are two crucial factors that help in forming a mesh network and allow discovery of peer mesh nodes. Better results in terms of network performance and reliability can be achieved when mesh peering management and path discovery are well handled.

Four HWMP frames involved in the path discovery process (e.g., for a mesh network that is implemented using or based on IEEE 802. 1 1s, or a mesh network that otherwise performs path discovery utilizing the HWMP mesh routing algorithm) are Path Request, Path Reply, Path Error, and Root Announcement. The two following aspects can be considered for optimizing mesh networks to achieve the best performance. The first one is peer link quality, and the second one is root node designation.

For example, the peer link quality describes the quality (based on or represented using one or more measurements or other link quantification measures) of a link between peer mesh nodes (e.g., a first and second mesh node that are directly connected to one another over a peer link). In some aspects, the peer link quality can be described based on the Received Signal Strength Index (RSSI) of the peer link between two mesh nodes. Each node associated with the peer link can measure a respective RSSI (e.g., the first peer mesh node can measure the RSSI of signals received over the peer link from the second peer mesh node and/or the second peer mesh node can measure the RSSI of signals received over the peer link from the first peer mesh node). The peer link quality of the respective peer links between peer mesh nodes within a WMN or mesh topology can be an important aspect for optimizing the overall performance of a mesh network because the peer link quality will have an impact on the overall mesh network performance.

For example, when a first peer mesh node moves away from a second peer mesh node with which peering has already (e.g., previously) been established, the peer link quality between the first and second peer mesh nodes may decrease and the overall mesh network performance can decline. In particular, when peer mesh nodes move away from one another, the peer link quality can decrease based on the RSSI of the peer link decreasing due to the movement apart. With the increased distance between peer mesh nodes, a peer mesh node with a weak signal strength (e.g., low or decreased RSSI) can occupy the wireless medium for a longer time, for instance due to retransmissions that are performed due to the increased distance/lower RSSI of the link. Because concurrent transmissions are typically not supported for Wi-Fi and/or other mesh networks, the increased airtime between peer mesh nodes with a lower RSSI peer link can affect (e.g., decrease) the medium availability to other peer mesh nodes. The decreased availability of the wireless medium due to the greater airtime between low peer link quality/low RSSI peer links can have a cumulative effect which eventually affects the overall network throughput. As such, there is a need for systems and techniques that can be used to better handle the configuration and management of peer mesh nodes (and the peer links therebetween) in order to improve the performance of the Mesh Basic Service Set (MBSS).

In general, root nodes are designed to reduce the path discovery frames. A Mesh Gate node (which can be a root node of a mesh network/mesh topology) is the top-level node in the mesh network, and can provide connectivity (for the whole mesh network and the plurality of other mesh nodes therewithin) to one or more non-mesh networks, using various connection and communication means. For example, a Mesh Gate can provide wired connectivity to one or more non-mesh networks via a switch, can provide wireless connectivity to one or more non-mesh networks or other wireless infrastructure networks through an AP interface, etc. Accordingly, the Mesh Gate node can be configured as a gateway between the individual mesh nodes of the mesh network and the one or more non-mesh networks, based on all of the mesh nodes being organized as child or leaf nodes of the top-level Mesh Gate node (e.g., within the mesh topology of the mesh network). For instance, all of the other mesh nodes in the mesh network can connect to the wired/wireless network via one or more wireless hops to the Mesh Gate node.

If a root node is unavailable in the mesh network (e.g., because a previously configured/available mesh root node has gone offline or otherwise become unavailable or unreachable, etc.), all mesh nodes are configured to search for and discover/find other peers using broadcast action frames. In such scenarios, the broadcast action frames from the plurality of mesh nodes of the mesh network creates large volumes or amounts of traffic which can overwhelm or saturate the wireless medium (e.g., the traffic corresponding to the broadcast action frames may occupy the wireless medium more often or to a greater extent than data packets). A root node for a mesh network is typically chosen based on a manual configuration, for example at the time when the mesh network is being set up or otherwise manually reconfigured or adjusted. Conventionally, root node configuration is static in mesh network deployments, with the selection of the root node being left unchanged unless or until the manually selected root node is down, in which case a new root node is selected. However, in examples where at least some mesh nodes (e.g., of the plurality of mesh nodes of the mesh network) are mobile in nature, a dynamic root node configuration can be desirable, as the high mobility and associated mobility events of these mesh nodes can cause the dynamics of the network to be constantly or frequently changing.

### Adaptive Mesh Peering

As noted above, mesh networks are always victims of bad mesh peers, which can be considered as the mesh nodes that are reached over peer links with a relatively weak signal strength (e.g., low mesh link quality, low RSSI, etc.), as transmission to and from these bad mesh peers may occupy a significant amount of the airtime on the wireless medium. Identification of these bad mesh peers and terminating them (e.g., terminating the corresponding low quality/low RSSI peer links to the bad mesh peers) is a solution that effectively solves this problem, but the current mesh network implementations do not address this issue. This is critical especially for sub-gigahertz (S1G) mesh networks, which can be heavily bandwidth-limited compared to other mesh networks operating on higher frequency bands with larger bandwidth. In some examples, an embodiment of an S1G mesh network can implement a mesh topology on an IEEE 802.11ah based network.

IEEE 802.11ah, also referred to as Wi-Fi HaLow, is a wireless networking protocol that uses a sub-gigahertz (S1G) wireless radio to provide low power consumption and long distance wireless communication. Wi-Fi HaLow devices operate in the license-free ISM (Industrial, Scientific, and Medical) frequency bands under one GigaHertz (GHz). A Wi-Fi HaLow Access Point (AP) can provide connectivity to thousands of Stations (STAs) within a network coverage of approximately a one-kilometer radius. Wi-Fi HaLow supports various bandwidths, including 1MHz, 2MHz, 4MHz, 8MHz, and 16MHz, which are approximately one order of magnitude narrower (e.g., 10 times narrower) than the bandwidths utilized by the IEEE 802.11ac (Wi-Fi 5) standard. Moreover, the symbol duration for IEEE 802.11ah Wi-Fi HaLow operating at a 2MHz bandwidth can be up to 10 times longer than the comparable symbol duration for IEEE 802.11ac Wi-Fi 5. As such, Wi-Fi HaLow networks have both significantly narrower bandwidths and significantly longer symbol durations within that narrower bandwidth, as compared to a Wi-Fi 5 or other more recent Wi-Fi network. Accordingly, airtime is more limited as a whole, and the airtime used for each individual data transmission in a HaLow network is also much longer as compared to a Wi-Fi 5 network.

In some embodiments of the adaptive mesh peering systems and techniques described herein, there are two timings at which a mesh node can be filtered out from a mesh network (e.g., two time instances or time occasions where a mesh node can be terminated or removed from peering). - during peering and during network operation. As described in greater depth below, the Received Signal Strength Indicator (RSSI) and/or the Packet Error Rate (PER) associated with a peer link/mesh peer node are two exemplary factors that can be considered during decision making of whether to accept a mesh peering request and/or whether to terminate an already established peering. In some aspects, the RSSI and/or PER of a peer link associated with a particular mesh node can be correspond to or be used to determine the corresponding peer link quality.

The PER can be calculated based on a number of packets lost out of a number of packets sent (e.g., the percentage of packets that are lost or experience an error, out of all of the packets that are transmitted by the peer mesh node/transmitted over the peer link for which PER is being determined). In one embodiment, a configured (e.g., predetermined) threshold value can be used to terminate an already established peering (e.g., an existing peer link between first and second peer mesh nodes) based on a determination that the PER of the link to this mesh node is not good enough. For example, the peer link from a first mesh node to a second mesh node can be terminated during network operation, based on a determination that the PER of the peer link from the first mesh node to the second mesh node is greater than the configured PER threshold value (e.g., based on increased PER corresponding to lower peer link quality).

Similarly, a configured or predetermined threshold value can be used to terminate an already established peering based on a determination that the RSSI of the peer link between first and second mesh nodes has fallen below the configured threshold value (e.g., fallen below the configured minimum RSSI value for keeping a peer link), based on decreased RSSI corresponding to lower peer link quality. In some aspects, separate threshold values can be used for PER and for RSSI. In some examples, a peer link may be terminated during network operation based on either one of the measured PER exceeding the configured PER threshold value or the measured RSSI falling below the configured RSSI threshold value. In some examples, a peer link may be terminated during network operation based on the occurrence of both the measured PER being greater than the configured PER threshold value and the measured RSSI being less than the configured RSSI threshold value.

In some embodiments, the measured RSSI between mesh nodes (and the corresponding configured RSSI threshold value) can be used to determine acceptance (or denial) of a peering request from a new mesh node. One or more, or both, of the measured RSSI and measured PER between mesh nodes can be used for decisions associated with terminating the established peering when the mesh node reaches its capacity on a maximum number of peer links (e.g., as the RSSI may be measured both before and after establishing peering, while the PER is measured only after peering has been established). For example, a first mesh node may determine that a peering request from a second mesh node should be accepted, based on the measured RSSI associated with the peering request (or other transmission received on the link from the second mesh node to the first mesh node) being greater than or equal to the configured RSSI threshold value.

When terminating an existing peer link (e.g., established peering) based on a mesh node reaching its capacity on a maximum number of peer links, the mesh node can be configured to identify or select the existing peer link with the worst or lowest peer link quality (e.g., based on one or more, or both, of the measured RSSI and/or PER of the existing peer link) for termination.

In some aspects, the mesh node can be configured to, before terminating an existing link to or denying a peering request from another mesh node, ensure that the peer node (to be disconnected or denied peering) has at least one other peer link established, to thereby ensure that disconnection or denial of the peering request from the other mesh node does not result in the other mesh node being completely disconnected from the Mesh BSS (MBSS).

For instance, a mesh node may, in some embodiments, be configured to accept a peering request that would otherwise be denied (e.g., a request that is above the PER threshold and/or below the RSSI threshold), when the requesting peer node does not have any other peer links. Similarly, a mesh node may, in some embodiments, be configured to maintain (e.g., not terminate or disconnect) existing peering with a peer node that would otherwise have its peer link terminated/disconnected, when the peer node does not have any other peer links. Considering both the RSSI and PER parameters of the links to the mesh network and dynamically determining whether to accept or terminate the mesh links based on the respective RSSI and/or PER measurements can be used to maintain the link quality of the peer links on the mesh network/mesh topology, which can improve the overall mesh network performance by preventing retransmissions due to low quality links.

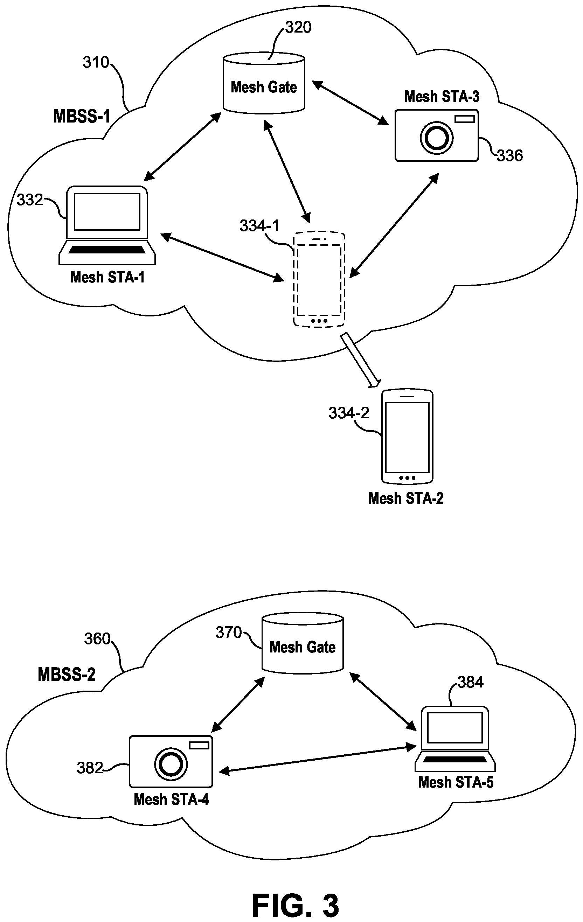

FIG. 3 is a diagram illustrating an example of a mobile mesh node (e.g., mesh STA) moving away from a first mesh network associated with a first mesh Basic Service Set (MBSS) and towards a second mesh network associated with a second MBSS, in accordance with some examples. For instance, in the example of FIG. 3, a first mesh network is associated with the first MBSS-1 (e.g., MBSS-1 310) and a second mesh network is associated with the second MBSS-2 (e.g., MBSS-2 360).

The mobile mesh node that moves away from MBSS-1 310 and towards MBSS-2 360 is illustrated as the mesh STA-2 (e.g., mesh STA 334-1 when in a first position in MBSS-1 310, and shown as mesh STA 334-2 when in the second position moving away from MBSS-1 310 and towards MBSS-2 360). The first mesh network associated with MBSS-1 310 can include a mesh gate 320, a first mesh STA-1 332, a second mesh STA-2 (334-1 when in MBSS-1 310, 334-2 after moving away from MBSS-1 310), and a third mesh STA-3 336. In the example of FIG. 3, the mesh network of MBSS-1 310 is fully connected - a respective mesh link exists between each possible combination of pairs formed from the four participating mesh nodes comprising the mesh gate 320, first mesh STA-1 332, second mesh STA-2 334-2, and third mesh STA-3 336. The second mesh network associated with MBSS-2 360 can include a mesh gate 370, a first mesh STA-4 382, and a second mesh STA-5 384, and may also be fully connected amongst the pairs formed between these three mesh nodes.

In some aspects, the diagram of FIG. 3 illustrates an exemplary scenario where a mobile mesh node (e.g., mesh STA-2) moves away from the remaining mesh nodes in a mesh network MBSS-1 310, thereby resulting in weak link with the remaining mesh nodes. In this scenario, mesh nodes Mesh-Gate 320, Mesh STA-1 332, and Mesh STA-3 336 can terminate their respective connection (e.g., their respective peer link) with a mobile mesh node Mesh STA-2 based on the RSSI, or PER (or both) of their respective link to Mesh STA-2, according to an embodiment of the adaptive mesh peering method disclosed herein. For example, the remaining mesh nodes may each check a peer link count of Mesh STA2-, and if the peer link count is equal to one, the remaining mesh node will not terminate its respective link to Mesh STA-2, even if the link is poor.

In some aspects, when the Mesh STA-2 is located at the first position 334-1 within the MBSS-1 310, each of the three respective peer links to Mesh STA-2 334-1 can be maintained within the first MBSS-1 310, based on the RSSI of each peer link to Mesh STA-2 334-1 being greater than or equal to a configured RSSI threshold value (e.g., the RSSI of the peer link from Mesh STA-1 332 to Mesh STA-2 334-1, the RSSI of the peer link from Mesh STA-3 336 to Mesh STA-2 334-1, and the RSSI of the peer link from Mesh-Gate 320 to the Mesh STA-2 334-1 can each be greater than or equal to the configured RSSI threshold) and/or based on the PER of each peer link to Mesh STA-2 334-1 being less than or equal to a configured PER threshold value (e.g., the PER of the peer link from Mesh STA-1 332 to Mesh STA-2 334-1, the PER of the peer link from Mesh STA-3 336 to Mesh STA-2 334-1, and the PER of the peer link from Mesh-Gate 320 to Mesh STA-2 334-1 can each be less than or equal to the configured PER threshold value).

After moving from the first position 334-1 to the second position 334-2, the remaining mesh nodes within MBSS-1 310 may each determine that the quality of their respective peer link to Mesh STA-2 in the second position 334-2 no longer meets or exceeds the minimum required peer link quality corresponding to the RSSI threshold and/or the PER threshold that have been configured for implementing the adaptive mesh peering techniques described herein. Based on the determination, each remaining mesh node (e.g., Mesh STA-1 332, Mesh STA-3 336, and/or Mesh-Gate 320) of the MBSS-1 310 can terminate its respective peer link to the Mesh STA-2 334-2.

In some aspects, the remaining mesh nodes of MBSS-1 310 can blacklist the mobile mesh node Mesh STA-2 for a timeout period/duration of a few seconds, after which peering can be reestablished if the mobile mesh node Mesh STA-2 has moved back within the coverage range of the mesh network MBSS-1 310 (e.g., if Mesh STA-2 moves back from location 334-2 outside of the MBSS-1, to location 334-1 within the MBSS-1).

For example, if Mesh STA-2 moves back within the mesh network MBSS-1 310 after the timeout duration (triggered when the remaining mesh nodes of MBSS-1 originally terminated their respective peer links to Mesh STA-2 when Mesh STA-2 previously moved out of the MBSS-1 and to the location 334-2), Mesh STA-2 can establish peering again with the mesh nodes in the mesh network MBSS-1 310 to again be part of this mesh network.

If the mobile mesh node Mesh STA-2 moves further away from MBSS-1 310 and/or is otherwise closer to another mesh network MBSS-2 360, the mobile mesh node Mesh STA-2 will join MBSS-2 360, where the mobile mesh node Mesh STA-2 can have better radio link quality with the mesh nodes in MBSS-2 360 (for example based on Mesh STA-2 transmitting the peering request(s) to the mesh nodes within MBSS-2 360 rather than to the mesh nodes within MBSS-1 310).

In some embodiments, the RSSI associated with a requesting peer node can be considered during peering with a new mesh node (and, as noted previously above, one or both of the RSSI and the PER for a mesh node link can be considered for decisions relating to terminating an existing peer link with another mesh node). In yet another embodiment, only the RSSI, or only the PER is considered during peering to terminate an existing link and accept the new peer. For example, only when the RSSI of a received signal from the new mesh node is higher than a predetermined threshold, the peering request from the new mesh node is accepted. In one embodiment, both the RSSI and PER are considered when deciding whether to terminate an already established peering mesh node, in another embodiment, only the RSSI is considered for termination, and in yet another embodiment, only the PER is considered for termination.

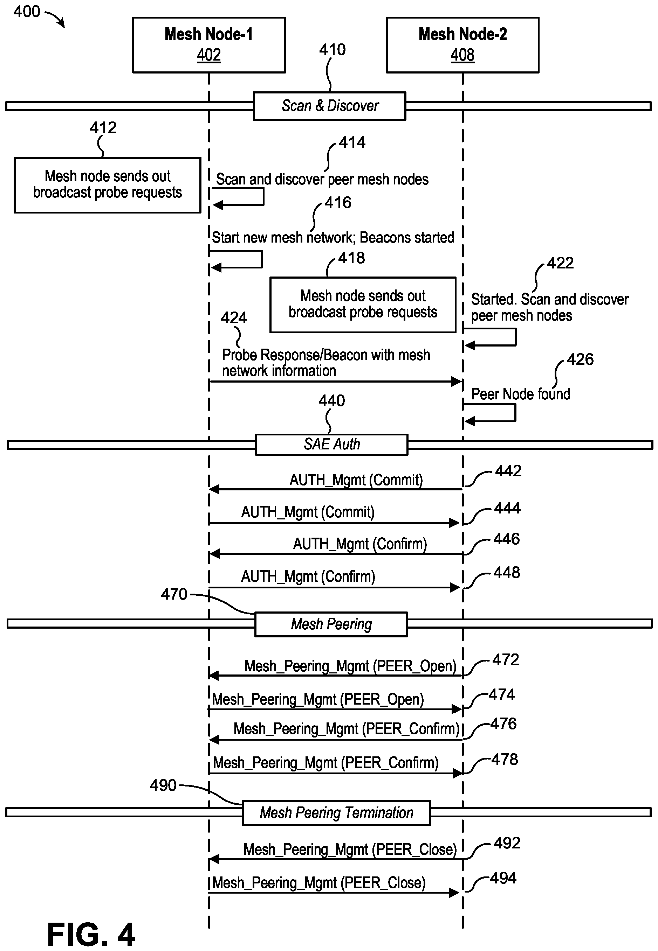

FIG. 4 is a signaling diagram 400 illustrating an example of signaling associated with a mesh peering process between a first mesh node (e.g., Mesh Node-1) 402 and a second mesh node (e.g., Mesh Node-2) 408, in accordance with some examples. In some aspects, the first mesh node 402 can be the same as or similar to the second mesh node 408, and vice versa. In some examples, the first mesh node 402 and/or the second mesh node 408 can be the same as or similar to one or more of the mesh nodes of FIG. 3. For example, the first mesh node 402 and/or the second mesh node 408 may be the same as or similar to one or more of the Mesh STA-1 332, the Mesh STA-2 334-1/334-2, the Mesh STA-3 336, the Mesh Gate 320, the Mesh Gate 370, the Mesh STA-4 382, and/or the Mesh STA-5 384 of FIG. 3, among various others.

In one illustrative example, the mesh peering signaling process 400 of FIG. 4 can include a scan and discover phase 410, an authentication phase 440, a mesh peering phase 470, and a mesh peering termination phase 490.

In the scan and discover phase 410, Mesh Node-1 402 joins a mesh network by sending out broadcast probe requests 412, scanning and discovering peer mesh nodes 414, and broadcasting mesh beacons 416. In particular, Mesh Node-1 402 can perform the scanning and discovery 414 of the peer mesh nodes based on receiving response information from the peer mesh nodes, wherein the response information from the peer mesh nodes is in response to the broadcast probe requests 412 sent out by the Mesh Node-1 402 at block 412. Based on the broadcast probe responses received from the discovered peer mesh nodes, at block 416 the Mesh Node-1 402 can start a new mesh network. A mesh network can be started with one or more mesh nodes. For example, Mesh Node-1 402 can start a new mesh network that includes only the Mesh Node-1 402 and/or can start a new mesh network that includes at least the Mesh Node-1 402, etc. In some examples, the Mesh Node-1 may start the new mesh network to include at least the Mesh Node-1 and the discovered peer mesh nodes from block 414. Mesh Node-1 402 starting the new mesh network at block 416 can include the Mesh Node-1 402 starting the transmission of the mesh beacons corresponding to the newly started mesh network.

Mesh Node-2 408 also sends out broadcast probe requests at block 418, in a process the same as or similar to Mesh Node-1 402 sending broadcast probe request at block 412. Mesh Node-2 408 can send the broadcast probe requests of block 418 based on starting a process to scan and discover mesh peer nodes 422, which may be the same as or similar to the process to scan and discover mesh peer nodes 414 that is performed by Mesh Node-1 402 and described previously above.

The broadcast probe request from Mesh Node-2 408 can be received by Mesh Node-1 402, based on Mesh Node-1 402 being a nearby node/peer node to Mesh Node-2 408. In response to receiving the broadcast probe requests sent from Mesh Node-2 408 (e.g., at block 418), at block 424 Mesh Node-1 402 sends a probe response with mesh network details to Mesh Node-2 408. At block 426, Mesh Node-2 408 determines that a peer node has been found, based on receiving the probe response 424 from the peer node Mesh Node-1 402.

In an authentication phase 440 of the mesh peering signaling 400, at block 442 Mesh Node-2 408 sends authentication management frames (e.g., AUTH_Mgmt(Commit) frames) to Mesh Node-1 402. At block 444, Mesh Node-1 402 sends authentication management frames (e.g., AUTH_Mgmt(Commit)) to Mesh Node-2 408. At block 446, Mesh Node-2 408 transmits, and Mesh Node-1 402 receives, an AUTH_Mgmt(Confirm) from Mesh Node-2 408. At block 448, Mesh Node-1 402 transmits, and Mesh Node-2 408 receives, an AUTH_Mgmt(Confirm) from Mesh Node-1 402.

In a mesh peering phase 470 of the mesh peering signaling 400, Mesh Node-2 408 sends mesh peering management frames to Mesh Node-1 402 to confirm mesh peering. For example, at block 472, Mesh Node-2 408 transmits to Mesh Node-1 402 a Mesh_Peering_Mgmt(PEER_Open) frame. At block 478, Mesh Node-1 402 transmits to Mesh Node-2 408 a Mesh_Peering_Mgmt(PEER_Confirm) frame.

Similarly, at block 474, Mesh Node-1 402 transmits to Mesh Node-2 408 a Mesh_Peering_Mgmt(PEER_Open) frame. At block 476, Mesh Node-2 408 transmits to Mesh Node-1 402 a Mesh_Peering_Mgmt(PEER_Confirm) frame.

Mesh Node-2 408 successfully joins the mesh network after receiving a mesh peering management frame (PEER_Confirm) from Mesh Node-1 402. For example, Mesh Node-2 408 successfully joins the mesh network after receiving the mesh peering management frame (PEER_Confirm) from Mesh Node-1 402 at block 478.

In a mesh peering termination phase 490, the mesh peering can be terminated between previously peered mesh nodes (e.g., peering can be terminated between nodes that have previously successfully completed the mesh peering phase 470). For example, in cases when Mesh Node-2 408 wishes to terminate mesh peering with Mesh Node-1 402, Mesh Node-2 408 can transmit a mesh peering management frame (PEER_Close) to Mesh Node-1 402 (e.g., at block 492). Mesh Node-1 402 can terminate or close the peer link between itself and Mesh Node-2 408 based on receiving the PEER_Close mesh peering management frame at block 492. At block 494, the Mesh Node-1 402 can transmit a response to Mesh Node-2 408 indicating that the peer link has been closed between Mesh Node-1 402 and Mesh Node-2 408. For example, at block 494, the Mesh Node-1 402 can transmit a mesh peering management frame (PEER_Close) indicative of the successful termination or closing of the peer link between Mesh Node-1 402 and Mesh Node-2 408.

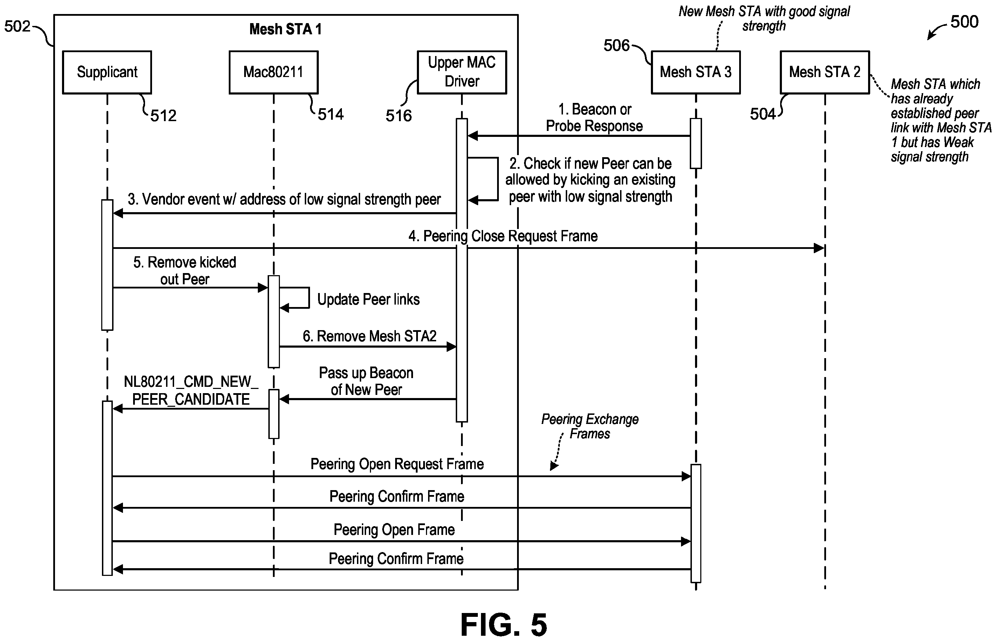

FIG. 5 is a signaling diagram 500 illustrating an example of a process of adaptive mesh peering in a mesh STA when a new peer is found after reaching the capacity on maximum number of peer links. For example, the process can be performed by Mesh STA1 502, when a new peer Mesh STA3 506 is found and an existing mesh peer Mesh STA2 504 is identified for termination based on having a weak signal strength peer link to Mesh STA1 502. In some aspects, Mesh STA1 502, Mesh STA2 504, and/or Mesh STA3 506 may be the same as or similar to one another, and/or may be the same as or similar to one or more of the Mesh STA-1 332, the Mesh STA-2 334-1/334-2, the Mesh STA-3 336, the Mesh Gate 320, the Mesh Gate 370, the Mesh STA-4 382, and/or the Mesh STA-5 384 of FIG. 3, among various others. In some aspects, Mesh STA1 502, Mesh STA2 504, and/or Mesh STA3 506 may be the same as or similar to one or more of Mesh STA1 402 and/or Mesh STA2 408 of FIG. 4.

In the example of FIG. 5, Mesh STA1 502 can include a supplicant 512, a mac80211 component 514, and an upper MAC driver 516.

In the first step of the adaptive mesh peering process 500, the upper MAC driver 516 of Mesh STA1 502 can receive a beacon or probe response from Mesh STA3 506. In some aspects, the upper MAC driver 516 of Mesh STA1 502 can be used to determine whether the new mesh peer Mesh STA3 506 has a good (e.g., strong) signal strength for its peer link to Mesh STA1 502. Based on a determination that Mesh STA3 506 does not have existing peering with Mesh STA1 502 (e.g., Mesh STA3 506 is a new Mesh STA peer for Mesh STA1 502), and that Mesh STA3 506 has a sufficiently good or strong signal strength to be added as a new peer for Mesh STA1 502, in Step 2, Mesh STA1 502 can use the upper MAC driver 516 to check (e.g., determine) if the new peer Mesh STA3 506 can be allowed as a new peer by kicking (e.g., terminating) an existing peer of Mesh STA1 502 that has a lower signal strength than the new peer Mesh STA3 506.

For example, the upper MAC driver 516 of Mesh STA1 502 can be configured to check if any of the existing peer links of Mesh STA1 502 has a corresponding signal strength that is lower than the signal strength (e.g., RSSI) measured or determined for the new peer link to the new peer Mesh STA3 506.

Based on Mesh STA1 502 identifying or determining an existing peer with a lower signal strength than the new Mesh STA3 506 (for example, Mesh STA2 504 can be identified by Mesh STA1 502 as an existing peer with a low signal strength that is less than the signal strength determined for the new peer Mesh STA3 506), Mesh STA1 502 can be configured to send a vendor event with the address of the identified lowest signal strength existing peer. In one illustrative example, the upper MAC driver 516 can send the vendor event with the address of the identified low signal strength existing peer (e.g., Mesh STA2 504) to the supplicant 512 of the Mesh STA1 502.

When the supplicant 512 of Mesh STA1 502 receives the vendor event from the upper MAC driver 516, the supplicant 512 closes (e.g., terminates) the peer link matching with the address identified in the vendor event. In some aspects, the supplicant 512 can close the peer link of the identified low signal strength peer by sending a peering close frame (e.g., Peering Close Request Frame) to the peer node having the address identified in the vendor event. For instance, the supplicant 512 of Mesh STA1 502 can send the Peering Close Request Frame to Mesh STA2 504, indicating that the peer link between Mesh STA1 502 and Mesh STA2 504 is being closed (e.g., terminated) by Mesh STA1 502.

Terminating the peer link with Mesh STA2 504 creates capacity for Mesh STA1 502 to establish a peer link with the new Mesh STA3 506 (e.g., recalling that the process 500 depicted in FIG. 5 corresponds to a scenario in which Mesh STA1 502 has the maximum number of peer links allowed prior to discovering the new, stronger signal strength peer Mesh STA3 506).

In some aspects, after the supplicant 512 sends the Peering Close Request Frame to terminate the peer link between Mesh STA1 502 and Mesh STA2 504, Mesh STA1 502 and Mesh STA3 506 can then establish a peer link by exchanging peering frames. For example, the supplicant 512 can perform the process of establishing the new peer link from Mesh STA1 502 to Mesh STA3 506 and the exchange of peering frames. The supplicant 512 is a user space daemon to maintain the wireless connection. In some aspects, the supplicant 512 can be configured to establish the peer link and exchange peering frames with the new Mesh STA3 506 based on the upper MAC driver 516 passing the beacon of the new peer Mesh STA3 506 to the Mac80211 component 514, which then provides to the supplicant 512 an NL80211_CMD_NEW_PEER_CANDIDATE information. The peering exchange frames between supplicant 512 of Mesh STA1 502 and the new Mesh STA3 506 can include a Peering Open Request Frame (from supplicant 512 to Mesh STA3 506), a Peering Confirm Frame (from Mesh STA3 506 to supplicant 512), a Peering Open Frame (from supplicant 512 to Mesh STA3 506), and a Peering Confirm Frame (from Mesh STA3 506 to supplicant 512). In cases of a mesh STA, mesh peering management and Wi-Fi Protected Access (WPA) key handshake can be handled (e.g., performed) by the supplicant 512 of the mesh STA (e.g., mesh STA1 502).

The systems and techniques for adaptive mesh peering described herein provide a novel approach to handle weak peer links in a mesh network. The adaptive mesh peering techniques can be useful especially when a mesh peer can only support a limited number of peer links due to memory lamination on chip. This is very common in Internet of Things (IoT) devices due to low memory available on the chip for cost and size reasons, resulting in a mesh node or mesh STA device where only a limited number of encryption keys can be stored in the target chip (e.g., a limited number of mesh peer links can be maintained and stored in the limited memory available on chip). For example, in a mesh network, every mesh STA maintains a unique PTK (unicast) and GTK (broadcast/multicast) pair per link. It is not always possible to store the above key pair for each peer link, especially in a crowded network where a given mesh STA sees many nearby additional mesh STAs that could be configured as peers. Adaptive mesh peering solves this problem by replacing a peer having a weak link with a peer having a stronger link when the mesh node reaches the maximum number of peer links it can support.

In some aspects, the mesh node (e.g., Mesh STA1 502) sees a new peer (e.g., Mesh STA3 506), by receiving a beacon, probe response, or peering open frame, and subsequently checks if the signal strength of the new peer (e.g., Mesh STA3 506) is better than any of its existing peer links by going through all the peer links (e.g., comparing the signal strength of the new peer to the corresponding signal strength measured or determined for each existing peer of the mesh node).

The mesh node (Mesh STA1 502) checks the mesh ID of the new peer (Mesh STA3 506) to confirm that the new peer (Mesh STA3 506) wants to join the same MBSS, verifies if the mesh configuration IE is present, and confirms that the new peer (Mesh STA3 506) is not already part of the mesh network. The mesh node (Mesh STA1 502) also goes through all of its existing peers and checks the number of peer links each existing peer has and compares the signal strengths. By checking the number of peer links each existing peer is connected with, the mesh node (Mesh STA1 502) ensures that an existing peer is not disconnected from the mesh network completely, as there can be cases where some mesh nodes are far away from all other mesh nodes in the MSBSS and can only see one mesh node. For example, if an existing peer has no other peers besides the mesh node, that existing peer will not be terminated and is not considered as a candidate for termination (e.g., if Mesh STA2 504 has no other peers besides Mesh STA1 502, then Mesh STA1 502 will not identify Mesh STA2 504 as a candidate for removal/termination because doing so would remove Mesh STA2 502 from the mesh network - instead, Mesh STA1 502 can use the next lowest signal strength existing peer that has other peer links as a candidate that will be terminated to create capacity for adding the new peer Mesh STA3 506; or alternatively, Mesh STA1 502 may deny the peering request from Mesh STA3 506 if Mesh STA1 502 has no existing peers with both other connections to mesh peer nodes and a lower signal strength than Mesh STA3 506).

The mesh node (Mesh STA1 502) can be configured to perform signal strength (e.g., RSSI) checks to ensure that the new peer (Mesh STA3 506) has a better signal strength than the existing peer (Mesh STA2) that is identified as the candidate for termination. In some cases, the signal strength check can be based on determining that the new peer (Mesh STA3 506) has a signal strength/RSSI that is greater than the signal strength/RSSI of the existing peer (Mesh STA2 504) by at least a configured RSSI margin (e.g., the difference between RSSI of Mesh STA3 506 and RTSSI of Mesh STA2 504 is greater than or equal to the configured RSSI margin amount). In one illustrative example, the configured RSSI margin for the signal strength check can use a default or configured value of five, among various other example values that may also be utilized without departing from the scope of the present disclosure. In some cases, the signal strength check can be based on determining that the new peer (Mesh STA3 506) has a signal strength/RSSI that is greater than that of the existing peer (Mesh STA2 504) by any amount (e.g., a requirement only that the RSSI margin be positive-valued, greater than zero, etc.).

The signal strength check comparing the RSSI of the new peer to be added (Mesh STA3 506) by closing or terminating the connection to an existing peer (Mesh STA2 504) can be implemented in order to avoid the ping-pong effect which is commonly encountered in Wi-Fi roaming. Once the mesh node (Mesh STA1 502) finds a weak peer, for example, the weak peer (Mesh STA2 504) has a lower signal strength than the new peer link, the mesh node (Mesh STA1 502) can be configured to store the weak peer address to be kicked out and the corresponding timestamp. The upper MAC (UMAC) driver 516 sends a vendor event to the supplicant 512 indicating the address of the identified weak peer Mesh STA2 504. The UMAC driver 516 can additionally be configured to check for incoming frames from the kicked out peer (Mesh STA2 504) after indicating the peer to the supplicant 512. This is to ensure that the kicked out peer (Mesh STA2 504) does not establish a peer link immediately (e.g., the kicked peer is blacklisted or otherwise prevented from establishing a peer link for at least some configured amount of time, which may be a finite or specified amount of time (e.g., a configured timeout or blacklist period) or may be an indefinite or unspecified amount of time). In some examples, the kicked peer is prevented from establishing a peer link for a configured amount of time corresponding to a blacklist period or a timeout. The mesh node may allow the kicked peer for connection or peering after the timeout period has lapsed or expired.

The supplicant 512 checks if the peer address exists as a stored entry in the station (STA) list maintained by the supplicant 512, and closes an existing link by sending a peering close request frame to the identified existing peer Mesh STA2 504 after receiving the mesh peer event from the UMAC driver 516. Linux stack advertises mesh capability for accepting additional peering in beacons, and once the peer link is closed, mac80211 514 enables accepting additional peering bit in the mesh configuration IE in beacons. Mac80211 is a framework which driver developers can use to write drivers for SoftMAC wireless devices. SoftMAC devices allow for a finer control of the hardware, allowing for 802.11 frame management including parsing and generating of wireless frames to be done in software. The mesh node (Mesh STA1 502) establishes a peer link with the new peer (Mesh STA3 506) after the existing weak peer link (with Mesh STA2 504) is closed.

Adaptive mesh peering improves the performance of the network as weak peer links occupy the most of the airtime with low data rates which also affect other peer links. It is important that a mesh STA always maintains strong links with good RSSI to prevent affecting the data performance. Embodiments of the adaptive mesh peering algorithm only allow one peer to be kicked out at a time, and the mesh STA starts adaptive mesh peering after the blacklist time expires. Some other embodiments also handle situations where multiple peers are available with better signal strength than some of the existing peer links. The adaptive mesh peering algorithm replaces more than one existing peer with new peers depending on the quality of the peer links. In some embodiments, a mesh STA only activates the adaptive mesh peering algorithm to monitor the mesh peer links when it reaches a maximum number of peer links and kick out one or more weak peer links when there is a new peer with a better peer link. In another embodiment, a mesh STA continuously monitors the existing mesh peer links and kicks out any existing peer with a weak peer link.

### Adaptive Root Mesh Node Management

The path discovery frames generated by mesh peers to discover other peers can consume most of the airtime in a dense mesh network. To reduce the airtime and/or number of path discovery frames on the wireless medium, a mesh network can be configured with one or more root mesh STAs. For example, as noted previously, a root mesh STA can be chosen (e.g., selected, configured, etc.) for a mesh network, and can subsequently be used to broadcast root announcement frames to the remaining, non-root mesh STAs also included in the same mesh network. For example, root mesh STAs are often selected as the mesh gates/mesh portals of mesh networks, although it is noted that any mesh STA participating in a mesh network can be used as the root mesh STA for the network (e.g., mesh STAs that are not mesh gates or portals can also be used as the root mesh STA).

The root announcement frames broadcast by the selected root mesh STA can be referred to as Root Announcement messages (RANN). For example, the RANN element can be transmitted in a Hybrid Wireless Mesh Protocol (HWMP), which is part of IEEE 802.11s, Path Selection frame. The RANN element (or other root announcement frames broadcast by the root mesh STA) can indicate information such as the root mesh STA address (e.g., MAC address), an indication of whether the root mesh STA is or is not also a mesh gate, an interval indicating how often the mesh root STA broadcasts the RANN message, a hop count field modifiable by STAs forwarding the RANN so that each STA can determine the distance to the root mesh STA, etc.

In general, the root announcement frames (e.g., RANNs) are generated at regular intervals by the root mesh STA, and are used to announce the presence of the root mesh STA to the other peer nodes in the mesh network. The other, non-root peers in the mesh network learn the mesh path (e.g., to the root mesh STA) based on the path replies sent by the other mesh peers. The configuration and selection of the root mesh node is typically static, and the identity of the root node is not expected to change. Accordingly, the RANN and/or other messages indicative of the identity, location, and or the path to the configured root node is not typically updated after being initially configured. However, a problem can arise when mesh peers move from time to time, as this mobility of the mesh peers, when combined with a static configuration of the root mesh STA, can lead to peers being unable to find the root (or more specifically, a path to the mesh root STA) and/or can lead to peers not finding each other in the mesh network. In some aspects, the systems and techniques described herein can be used to address this challenge, based on the systems and techniques being used to provide a dynamic approach for finding an appropriate mesh peer to be designated (e.g., configured, selected, utilized, etc.) as a root mesh STA. The dynamic identification and designation/configuration of a root mesh STA can be performed periodically, at a configured or dynamic periodic interval. For example, the dynamic identification and designation of a root mesh STA for a mesh network can be performed from time to time with the changing dynamic(s) of the mesh network, as will be described in greater detail below.

In one illustrative example, a new approach for dynamically selecting and configuring the dynamic root mesh node for a mesh network is described to improve the overall performance of the mesh network. Some examples of root mesh node management techniques may assign a root mesh node for a mesh network and/or may discharge an existing root mesh node based on one or more conditions of the mesh network. In some embodiments, these conditions for assigning and/or discharging a root mesh node can include (but are not limited to) a number of peer mesh nodes directly connected to a candidate root mesh node, and a number of root mesh nodes directly connected to this candidate root mesh node.

For example, a condition can include a number of mesh nodes that can be reached by the candidate root mesh node, where a candidate root mesh node that can reach a greater number of mesh nodes in the network receives preference or priority over a different candidate root mesh node that can reach a lesser number of mesh nodes in the network. The number of mesh nodes reachable from a candidate root mesh node can be determined based on path table information of the candidate root mesh node, wherein the path table information is maintained and updated by the candidate root mesh node according to path replies sent by other mesh nodes in the network and received by the candidate root mesh node.

In some embodiments, a non-root mesh node can be assigned to be a root mesh node based on a determination that the non-root mesh node is handling too many forwarding packets. For example, the adaptive root mesh node management technique can decide to assign a non-root mesh node to be a root mesh node based on an air packet count, a total air time, or both the air packet count and total air time measured for the non-root mesh node over a measurement window or other pre-determined interval of time.

In some examples, a mesh STA may be configured as a root mesh node only if the mesh STA has more than one peer associated with it and the mesh STA does not have direct access (e.g., does not have a single-hop link) to any existing root mesh nodes in the mesh network. Direct access is defined as one hop distance. This allows for more dynamic management of mesh networks to address the mobility problem of the peers. In cases when two root mesh nodes are directly connected with one hop distance, the root mesh node management technique can be used and/or configured to stop a root announcement being sent from a root mesh node that does not have any other connected peers except for the other root mesh node. This reduces the number of Root Announcement (RANN/GANN) broadcast frames in the mesh network.

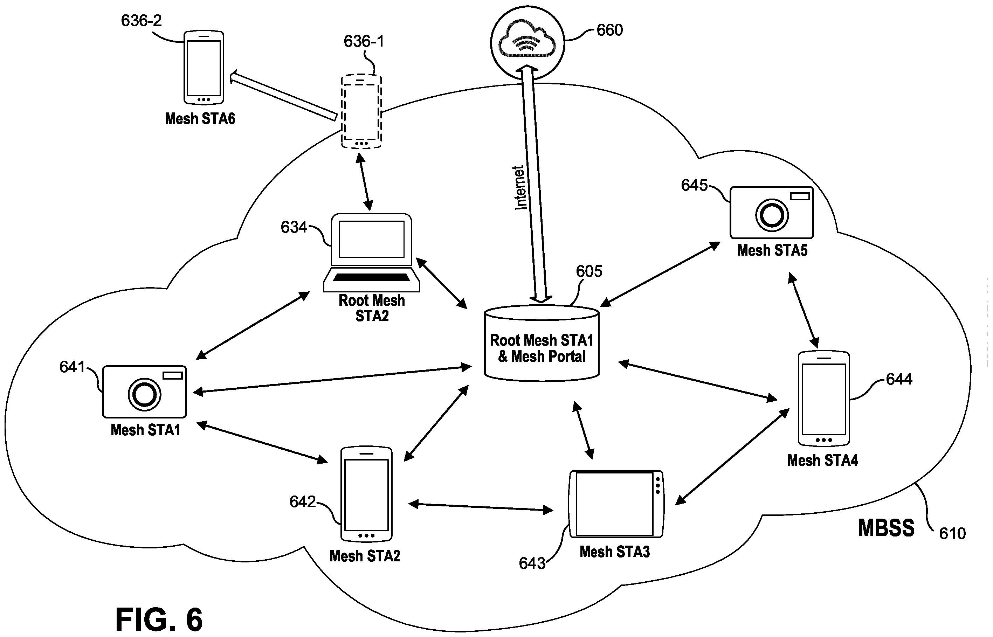

FIG. 6 is a diagram illustrating an example of adaptive root mesh node management for an MBSS 610 that includes multiple root mesh nodes (e.g., also referred to as root mesh STAs), in accordance with some examples. In some aspects, the MBSS 610 can be the same as or similar to one or more of MBS-1 310 of FIG. 3, MBSS-2 360 of FIG. 3, etc. The MBSS 610 shown in FIG. 6 can include a plurality of mesh STAs (e.g., Root Mesh STA1 605, Root Mesh STA2 634, non-root Mesh STA2 642, non-root Mesh STA3 643, non-root Mesh STA4 644, non-root Mesh STA5 645, non-root Mesh STA6 636-1, etc.). The mesh STAs included in the MBSS 610 and/or corresponding mesh network can be of various different types. Additionally, the mesh STAs included in the MBSS 610 can be configured with different roles. For example, one or more of the plurality of mesh STAs of the MBSS 610 can be configured as a mesh root node and/or one or more of the plurality of mesh STAs of the MBSS 610 can be configured as a mesh portal node.

For instance, the mesh STA1 605 is shown in FIG. 6 as being configured as both a root mesh node and a mesh portal node. In its role as a mesh portal node, the mesh STA1 605 can provide connection between the MBSS 610 and one or more additional networks. For instance, acting as a mesh portal node, mesh STA1 605 can connect the MBSS 610 (and all of the mesh STAs included in the MBSS 610) to an internet gateway 660, to thereby provide an internet connection from the internet gateway 660 to all other mesh nodes of the MBSS 610.

A mesh network or MBSS can have one root mesh node, or can have multiple root mesh nodes. For example, the MBSS 610 includes the first root mesh STA1 605 and further includes a second root mesh STA2 634. In this example, the first root mesh STA1 605 is additionally configured as a mesh portal, as described above, while the second root mesh STA2 634 is not configured as a mesh portal.

In one illustrative example, FIG. 6 depicts an exemplary scenario where the Root Mesh STA2 634 designation is no longer a valid root mesh node, based on a peering mesh node Mesh STA6 moving away from the MBSS 610 coverage range. For instance, the peering mesh node Mesh STA6 can move from a first location 636-1 (within the MBSS 610 coverage range) to a second location 636-2 (which can be entirely outside of the MBSS 610 coverage range, or may be closer to the edge/end of the MBSS 610 coverage range as compared to the first location 636-1). When in the first location 636-1, the Mesh STA6 was a peering mesh node with a peer link to the second Root Mesh STA2 634. When in the second location 636-2, the Mesh STA6 may no longer be a peering mesh node of the second Root Mesh STA2 634, for example based on the peer link quality (e.g., RSSI-based, PER-based, or both RSSI and PER-based, etc.) no longer meeting a minimum link quality threshold as described above with respect to FIGS. 3-5.

In the MBSS 610, a root mesh node Root Mesh STA1 & Mesh Portal 605 is also a mesh portal providing connectivity to the internet gateway 660 for all other mesh nodes in the MBSS 610. Because all other mesh nodes in the MBSS 610 have a path to the Root Mesh STA1 & Mesh Portal 605, all other mesh nodes in the MBSS 610 have a path to connect to the internet via internet gateway 660. Mesh nodes may have a direct or indirect path to the Root Mesh STA1 & Mesh Portal 605. For example, the Root Mesh STA2 634, the first non-root Mesh STA1 641, the second non-root Mesh STA2 642, the third non-root Mesh STA3 643, the fourth non-root Mesh STA4 644, and the fifth non-root Mesh STA5 645 all have a direct, one-hop path to the Root Mesh STA1 & Mesh Portal 605.

When in the first location 636-1 (e.g., within the MBSS 610), the sixth non-root Mesh STA6 does not have a direct, one-hop path to the Root Mesh STA1 & Mesh Portal 605. Instead, the sixth non-root Mesh STA6 connects to the second Root Mesh STA2 634 designated as a root mesh node and a peer mesh node of Mesh STA6. Accordingly, the Mesh STA6 can connect to the mesh network through the second root mesh node provided by Root Mesh STA2 634. The mesh node Mesh STA6 accesses the MBSS 610 through the root mesh node Root Mesh STA2 634, and learns paths to all mesh peers in the MBSS 610 from the root announcement (e.g., RANN/GANN) sent by Root Mesh STA2 and corresponding replies sent by other peers.

When Mesh STA6 moves away from the MBSS 610 (e.g., when Mesh STA6 moves from the first location 636-1 to the second location 636-2), the Root Mesh STA2 634 root announcements (e.g., RANN/GANN) would become redundant as none of the remaining mesh nodes within the MBSS 610 are solely connected to Root Mesh STA2 634. For instance, the Mesh STA6 in location 636-1 was the only mesh STA that had Root Mesh STA2 634 as its only single-hop peering root node - each remaining mesh STA of the MBSS 610 has at least Root Mesh STA1 & Mesh Portal 605 as a single-hop peering root node.

Accordingly, when Mesh STA6 moves away or out of MBSS 610 and to the second location 636-2, the configuration of the Root Mesh STA2 634 as a second root node for the MBSS 610 becomes redundant. All of the remaining mesh nodes in the MBSS 610 can directly receive root announcements from Root Mesh STA1 & Mesh Portal 605. For instance, while the first non-root Mesh STA1 641 is connected to both Root Mesh STA2 634 and Root Mesh STA1 & Mesh Portal 605 via single hop peering links, it is redundant and unnecessary for the first non-root Mesh STA1 641 to receive a root announcement from both Root Mesh STA2 634 and Root Mesh STA1 & Mesh Portal 605. However, existing mesh network implementations with static root node configuration and management do not support dynamic/automatic updating and/or reconfiguring of the root mesh node roles within the mesh network/MBSS. As such, existing mesh network implementations with static root node configuration and management would leave Root Mesh STA2 634 in its configuration as a root node, and Root Mesh STA2 634 would continue to periodically broadcast the root announcement RANN/GANN despite Root Mesh STA2 634 no longer being the only single hop root node peer for any of the remaining non-root mesh nodes within the MBSS 610 after the departure of the MESH STA6.

The systems and techniques described herein can improve the efficiency of mesh root node management and configuration, by removing root nodes from their role as root when changing network topology or changing network dynamics result in an existing root node no longer providing at least one non-root mesh STAs with its only single-hop/direct connection to a mesh root node. For instance, in the example of FIG. 6, the first non-root Mesh STA1 641 can receive a root announcement from only Root Mesh STA1 & Mesh Portal 605 without experiencing any adverse effects to its operation or its ability to reach a root node, mesh portal 605, and/or the internet gateway 660. Accordingly, the systems and techniques can use the departure of the Mesh STA6 from the MBSS 610 as a triggering condition to remove the Root Mesh STA2 634 from its role or configuration as a root node of the MBSS 610, and the Root Mesh STA2 634 can be reconfigured to begin operating as a normal (e.g., non-root) mesh node after Mesh STA6 leaves the MBSS 610 and moves to the second location 636-2.

An embodiment of the adaptive root mesh node management method changes an existing Root Mesh node (e.g., Root Mesh STA2) from a root mesh node configuration to a normal (e.g., non-root) mesh node configuration in cases when all the non-root mesh nodes directly connected to the existing Root Mesh node (e.g., Root Mesh STA2) are also directly connected to another root mesh node (e.g., Root Mesh STA1 & Mesh Portal 605). This change avoids additional periodic root announcement RANN/GANN frames from the existing Root Mesh node (e.g., Root Mesh STA2 634) and therefore reduces the overall traffic in the network and/or the airtime on the wireless medium used for the MBSS 610.

As described and contemplated herein, each of the mesh nodes in various embodiments manages a Media Access Control (MAC) layer and a Physical (PHY) layer in accordance with an Wi-Fi (IEEE 802.11) standard. For example, the mesh node can be a mobile device, a personal computer, a laptop computer, an Internet of Things (IoT) device, a wearable device, an extended reality device, a video server, or a communication device on a vehicle. The mesh node includes a Radio Frequency (RF) transmitter, an RF receiver, an antenna, one or more memory banks, input and output interfaces and communication bus. The RF transmitter transmits data by modulating one or more carrier wave signals to encoded digital information, and the RF receiver receives data by demodulating the signal to recreate the original digital information. The mesh node includes a MAC processor, a PHY processor, and a HOST processor. These processors can be any type of Integrated Circuit (IC) including a General Processing Unit (GPU), an Application Specific Integrated Circuit (ASIC) or Reduced Instruction Set Computer-Five (RISC-V) based ICs, amongst others. The memory stores software including functions of the MAC layer. Each processor executes software to implement the functions of the respective communication/application layer. The PHY processor, in particular, includes a transmitting signal processing unit and a receiving signal processing unit and manages the interface with the wireless medium. The PHY processor operates on Physical Protocol Data Units (PPDUs) by exchanging digital samples with the radio module which comprises the RF transmitter, Digital-to-Analog Converters (DACs), the RF receiver, Analog-to-Digital Converters (ADCs) and digital filters. The MAC processor executes MAC level instructions and manages the interface between the application software and the wireless medium, through the PHY processor. The MAC processor is responsible for coordinating access to the wireless medium so that the mesh nodes in range can communicate effectively. The MAC processor adds header and tail bytes to units of data provided by the higher levels and sends them to the PHY layer for transmission. The reverse happens when receiving data from the PHY layer. If a wireless frame is received in error, the MAC processor manages the retransmission of the wireless frame. The HOST processor interfaces with the MAC layer and is responsible for running high level functionalities.

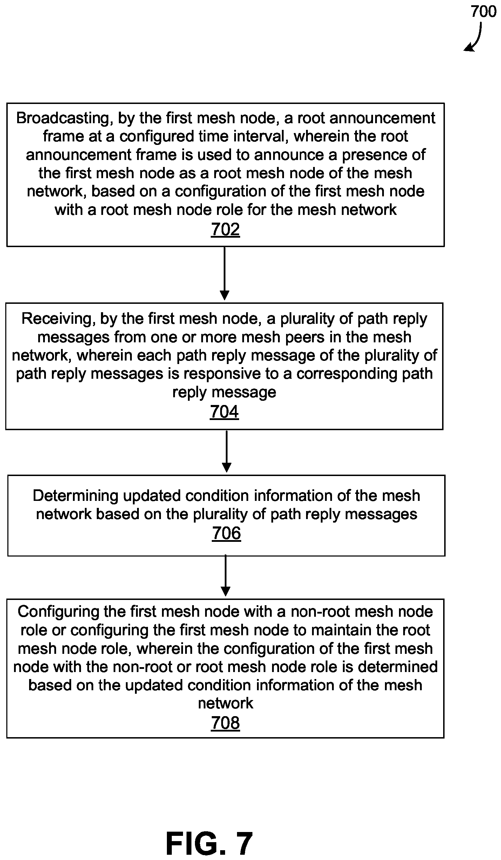

FIG. 7 is a flow diagram of an example of a process 700 for adaptive root mesh configuration for a first mesh node in a mesh network. For example, the process 700 can be performed for a first mesh node in a mesh network that is the same as or similar to the mesh network associated with MBSS 610 of FIG. 6. In some examples, the first mesh node can be the same as or similar to the Root Mesh STA2 634 of FIG. 6 and/or the Root Mesh STA1 & Mesh Portal 605 of FIG. 6. In some aspects, the mesh network can be the same as or similar to one or more of the mesh network associated with MBSS-1 310 and/or MBSS-2 360 of FIG. 3, etc.

At block 702, the process 700 includes broadcasting, by the first mesh node, a root announcement frame at a configured time interval, wherein the root announcement frame is used to announce a presence of the first mesh node as a root mesh node of the mesh network, based on a configuration of the first mesh node with a root mesh node role for the mesh network. At block 704, the process 700 includes receiving, by the first mesh node, a plurality of path reply messages from one or more mesh peers in the mesh network, wherein each path reply message of the plurality of path reply messages is responsive to a corresponding path request message. At block 706, the process 700 includes determining updated condition information of the mesh network based on the plurality of path reply messages. At block 708, the process 700 includes configuring the first mesh node with a non-root mesh node role or configuring the first mesh node to maintain the root mesh node role, wherein the configuration of the first mesh node with the non-root or root mesh node role is determined based on the updated condition information of the mesh network.

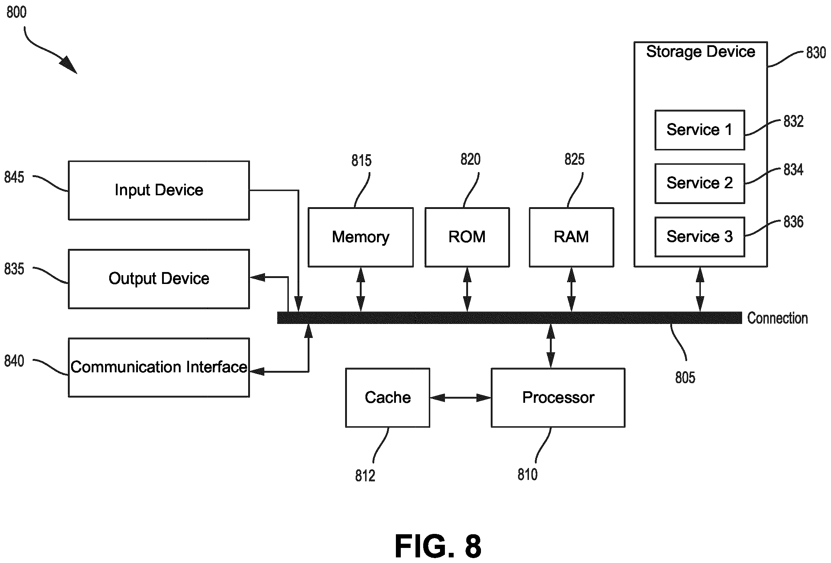

FIG. 8 illustrates a computing device architecture 800 of a computing device which can implement one or more techniques described herein. In some examples, the computing device can include a mobile device, a wearable device, an extended reality device (e.g., a Virtual Reality (VR) device, an Augmented Reality (AR) device, or a Mixed Reality (MR) device), a personal computer, a laptop computer, a video server, a vehicle (or computing device of a vehicle), or other device. The components of computing device architecture 800 are shown in electrical communication with each other using connection 805, such as a bus. The computing device architecture 800 includes a processing unit 810 and computing device connection 805 that couples various computing device components including computing device memory 815, such as Read Only Memory (ROM) 820 and Random-Access Memory (RAM) 825, to processor 810.

Computing device architecture 800 can include a cache of high-speed memory connected directly with, in close proximity to, or integrated as part of processor 810. Computing device architecture 800 can copy data from memory 815 and/or the storage device 830 to cache 812 for quick access by processor 810. In this way, the cache can provide a performance boost that avoids processor 810 delays while waiting for data. These and other engines can control or be configured to control processor 810 to perform various actions. Other computing device memory 815 may be available for use as well. Memory 815 can include multiple different types of memory with different performance characteristics. Processor 810 can include any general-purpose processor and a hardware or software service, such as service 1 832, service 2 834, and service 3 836 stored in storage device 830, configured to control processor 810 as well as a special-purpose processor where software instructions are incorporated into the processor design. Processor 810 may be a self-contained system, containing multiple cores or processors, a bus, memory controller, cache, etc. A multi-core processor may be symmetric or asymmetric.

To enable user interaction with the computing device architecture 800, input device 845 can represent any number of input mechanisms, such as a microphone for speech, a touch-sensitive screen for gesture or graphical input, keyboard, mouse, motion input, speech and so forth. Output device 835 can also be one or more of a number of output mechanisms known to those of skill in the art, such as a display, projector, television, speaker device, etc. In some instances, multimodal computing devices can enable a user to provide multiple types of input to communicate with computing device architecture 800. Communication interface 840 can generally govern and manage the user input and computing device output. There is no restriction on operating on any particular hardware arrangement and therefore the basic features here may easily be substituted for improved hardware or firmware arrangements as they are developed.

Storage device 830 is a non-volatile memory and can be a hard disk or other types of computer readable media which can store data that are accessible by a computer, such as magnetic cassettes, flash memory cards, solid state memory devices, digital versatile disks, cartridges, RAM, ROM, and hybrids thereof. Storage device 830 can include services 832, 834, 836 for controlling processor 810. Other hardware or software modules or engines are contemplated. Storage device 830 can be connected to the computing device connection 805. In one aspect, a hardware module that performs a particular function can include the software or processor readable codes stored in a computer-readable medium in connection with the necessary hardware components, such as processor 810, connection 805, output device 835, and so forth, to carry out the function.

The term "device" is not limited to one or a specific number of physical objects (such as one smartphone, one controller, one processing system and so on). As used herein, a device may be any electronic device with one or more parts that may implement at least some portions of this disclosure.

Individual aspects may be described above as a process or method which is depicted as a flowchart or a data flow diagram. Although a flowchart may describe the operations as a sequential process, many of the operations can be performed in parallel or concurrently. In addition, the order of the operations may be re-arranged. A process is terminated when its operations are completed, but could have additional steps not included in a figure. A process may correspond to a method, a function, a procedure, a subroutine, or a subprogram. When a process corresponds to a function, its termination can correspond to a return of the function to the calling function or the main function.

The techniques described herein may also be implemented in electronic hardware, computer software, firmware, or any combination thereof. Such techniques may be implemented in any of a variety of devices such as general purposes computers, wireless communication device handsets, or integrated circuit devices having multiple uses including application in wireless communication device handsets and other devices. Any features described as modules or components may be implemented together in an integrated logic device or separately as discrete but interoperable logic devices. If implemented in software, the techniques may be realized at least in part by a computer-readable data storage medium comprising program code including instructions that, when executed, performs one or more of the methods described above.

The program code may be executed by a processor, which may include one or more processors, such as one or more Digital Signal Processors (DSPs), general purpose microprocessors, an Application Specific Integrated Circuits (ASICs), Field Programmable Gate Arrays (FPGAs), or other equivalent integrated or discrete logic circuitry. Such a processor may be configured to perform any of the techniques described in this disclosure. A general-purpose processor may be a microprocessor; but in the alternative, the processor may be any conventional processor, controller, microcontroller, or state machine. A processor may also be implemented as a combination of computing devices.

## Claims

1. An adaptive root mesh configuration method for a first mesh node in a mesh network, the method comprising:
broadcasting, by the first mesh node, a root announcement frame at a configured time interval, wherein the root announcement frame is used to announce a presence of the first mesh node as a root mesh node of the mesh network, based on a configuration of the first mesh node with a root mesh node role for the mesh network;
receiving, by the first mesh node, a plurality of path reply messages from one or more mesh peers in the mesh network, wherein each path reply message of the plurality of path reply messages is responsive to a corresponding path request message;
determining updated condition information of the mesh network based on the plurality of path reply messages; and
configuring the first mesh node with a non-root mesh node role or configuring the first mesh node to maintain the root mesh node role, wherein the configuration of the first mesh node with the non-root or root mesh node role is determined based on the updated condition information of the mesh network.

2. The method of claim 1, wherein configuring the first mesh node with the non-root mesh node role or configuring the first mesh node to maintain the root mesh node role comprises implementing an adaptive root mesh configuration for the first mesh node.

3. The method of claim 2, wherein the adaptive root mesh configuration is determined based on the updated condition information, and wherein the adaptive root mesh configuration is indicative of the non-root mesh node role or the root mesh node role to be used by the first mesh node.

4. The method of claim 2 or 3, wherein:
the adaptive root mesh configuration causes the first mesh node to maintain the root mesh node role; and
to maintain the root mesh node role, the first mesh node is configured to continue generating and broadcasting the root announcement frame at the configured time interval.

5. The method of any one of claims 2 to 4, wherein:
the adaptive root mesh configuration causes the first mesh node to switch from the root mesh node role to the non-root mesh node role; and optionally
wherein, to switch from the root mesh node role to the non-root mesh node role, the first mesh node is configured to stop broadcasting the root announcement frame.

6. The method of any one of claims 1 to 5, wherein the updated condition information of the mesh network is indicative of a number of peer mesh nodes directly connected to the first mesh node, a number of additional root mesh nodes directly connected to the first mesh node, or both the number of directly connected peer mesh nodes and the number of directly connected additional root mesh nodes of the first mesh node.

7. The method of claim 6, wherein the first mesh node is configured to switch from the root mesh node role to the non-root mesh node role based on determining:
the number of peer mesh nodes directly connected to the first mesh node is less than a threshold value; and
the number of additional root mesh nodes directly connected to the first mesh node is at least one.

8. The method of claim 6 or 7, wherein the first mesh node is configured to be a normal mesh node when the number of additional root mesh nodes directly connected to the first mesh node is at least one, and wherein configuring the first mesh node to be a normal mesh node corresponds to configuring the first mesh node with the non-root mesh node role; and/or
wherein the first mesh node is configured to maintain the root mesh node role based on determining:
the number of peer mesh nodes directly connected to the first mesh node is greater than a threshold value; and
the number of additional root mesh nodes directly connected to the first mesh node is zero.

9. The method of any one of claims 6 to 8, wherein:
a peer mesh node is directly connected to the first mesh node when there is a one hop distance between the peer mesh node and the first mesh node; and
an additional root mesh node is directly connected to the first mesh node when there is a one hop distance between the additional root mesh node and the first mesh node.

10. The method of any one of claims 1 to 9, wherein determining the updated condition information of the mesh network is further based on information associated with packets forwarded by the first mesh node in the mesh network; and optionally
wherein the updated condition information of the mesh network is determined by one or more of an air packet count associated with the packets forwarded by the first mesh node or a total air time associated with the packets forwarded by the first mesh node.

11. A first mesh node in a mesh network, the first mesh node comprising:
a radio frequency (RF) receiver and an RF transmitter;
a processor, communicatively coupled to the RF receiver and the RF transmitter; and
one or more memory banks, communicatively coupled to the processor and storing processor readable instructions that, when executed by the processor, causes the processor to perform actions comprising:
broadcasting a root announcement frame by the RF transmitter at a configured time interval, wherein the root announcement frame is used to announce a presence of the first mesh node as a root mesh node of the mesh network, based on a configuration of the first mesh node with a root mesh node role for the mesh network;
receiving, by the RF receiver, a plurality of path reply messages from one or more mesh peers in the mesh network, wherein each path reply message of the plurality of path reply messages is responsive to a corresponding path request message;
determining updated condition information of the mesh network based on the plurality of path reply messages; and
configuring the first mesh node with a non-root mesh node role or configuring the first mesh node to maintain the root mesh node role, wherein the configuration of the first mesh node with the non-root or root mesh node role is determined based on the updated condition information of the mesh network.

12. The first mesh node of claim 11, wherein configuring the first mesh node with the non-root mesh node role or configuring the first mesh node to maintain the root mesh node role comprises implementing an adaptive root mesh configuration for the first mesh node.

13. The first mesh node of claim 12, wherein the adaptive root mesh configuration is determined based on the updated condition information, and wherein the adaptive root mesh configuration is indicative of the non-root mesh node role or the root mesh node role to be used by the first mesh node; and/or
wherein:
the adaptive root mesh configuration causes the first mesh node to maintain the root mesh node role; and
to maintain the root mesh node role, the first mesh node is configured to continue generating and broadcasting the root announcement frame at the configured time interval.

14. The first mesh node of claim 12 or 13, wherein:
the adaptive root mesh configuration causes the first mesh node to switch from the root mesh node role to the non-root mesh node role; and optionally
wherein, to switch from the root mesh node role to the non-root mesh node role, the first mesh node is configured to stop broadcasting the root announcement frame.

15. The first mesh node of any one of claims 11 to 14, wherein the updated condition information of the mesh network is indicative of a number of peer mesh nodes directly connected to the first mesh node, a number of additional root mesh nodes directly connected to the first mesh node, or both the number of directly connected peer mesh nodes and the number of directly connected additional root mesh nodes of the first mesh node.

## Amended claims

### Amended claims in accordance with Rule 137(2) EPC.

1. An adaptive root mesh configuration method for a first mesh node (402) in a mesh network, the method comprising:
broadcasting, by the first mesh node, a root announcement frame at a configured time interval, wherein the root announcement frame is used to announce a presence of the first mesh node as a root mesh node of the mesh network, based on a configuration of the first mesh node with a root mesh node role for the mesh network;
receiving, by the first mesh node, a plurality of path reply messages from one or more mesh peers in the mesh network, wherein each path reply message of the plurality of path reply messages is responsive to a corresponding path request message;
determining updated condition information of the mesh network based on the plurality of path reply messages, wherein the updated condition information of the mesh network is indicative of a number of peer mesh nodes directly connected to the first mesh node, a number of additional root mesh nodes directly connected to the first mesh node, or both the number of directly connected peer mesh nodes and the number of directly connected additional root mesh nodes of the first mesh node; and
configuring, by the first mesh node, the first mesh node with a non-root mesh node role or configuring, by the first mesh node, the first mesh node to maintain the root mesh node role, wherein the configuration of the first mesh node with the non-root or root mesh node role is determined based on the updated condition information of the mesh network, wherein configuring the first mesh node with the non-root mesh node role or configuring the first mesh node to maintain the root mesh node role comprises implementing an adaptive root mesh configuration for the first mesh node, wherein the adaptive root mesh configuration causes the first mesh node to switch from the root mesh node role to the non-root mesh node role, and wherein, to switch from the root mesh node role to the non-root mesh node role, the first mesh node is configured to stop broadcasting the root announcement frame;
wherein the first mesh node is configured to maintain the root mesh node role based on determining at least one of:
the number of peer mesh nodes directly connected to the first mesh node is greater than a threshold value; and
the number of additional root mesh nodes directly connected to the first mesh node is zero.

2. The method of claim 1, wherein the adaptive root mesh configuration is determined based on the updated condition information, and wherein the adaptive root mesh configuration is indicative of the non-root mesh node role or the root mesh node role to be used by the first mesh node.

3. The method of claim 1, wherein:
the adaptive root mesh configuration causes the first mesh node to maintain the root mesh node role; and
to maintain the root mesh node role, the first mesh node is configured to continue generating and broadcasting the root announcement frame at the configured time interval.

4. The method of claim 1, wherein the first mesh node is configured to switch from the root mesh node role to the non-root mesh node role based on determining:
the number of peer mesh nodes directly connected to the first mesh node is less than a threshold value; and
the number of additional root mesh nodes directly connected to the first mesh node is at least one.

5. The method of claim 1, wherein the first mesh node is configured to be a normal mesh node when the number of additional root mesh nodes directly connected to the first mesh node is at least one, and wherein configuring the first mesh node to be a normal mesh node corresponds to configuring the first mesh node with the non-root mesh node role.

6. The method of claim 1, wherein:
a peer mesh node is directly connected to the first mesh node when there is a one hop distance between the peer mesh node and the first mesh node; and
an additional root mesh node is directly connected to the first mesh node when there is a one hop distance between the additional root mesh node and the first mesh node.

7. The method of claim 1, wherein determining the updated condition information of the mesh network is further based on information associated with packets forwarded by the first mesh node in the mesh network.

8. The method of claim 7, wherein the updated condition information of the mesh network is determined by one or more of an air packet count associated with the packets forwarded by the first mesh node or a total air time associated with the packets forwarded by the first mesh node.

9. A first mesh node (402) in a mesh network, the first mesh node comprising:
a radio frequency (RF) receiver and an RF transmitter;
a processor, communicatively coupled to the RF receiver and the RF transmitter; and
one or more memory banks, communicatively coupled to the processor and storing processor readable instructions that, when executed by the processor, causes the processor to perform actions comprising:
broadcasting a root announcement frame by the RF transmitter at a configured time interval, wherein the root announcement frame is used to announce a presence of the first mesh node as a root mesh node of the mesh network, based on a configuration of the first mesh node with a root mesh node role for the mesh network;
receiving, by the RF receiver, a plurality of path reply messages from one or more mesh peers in the mesh network, wherein each path reply message of the plurality of path reply messages is responsive to a corresponding path request message;
determining updated condition information of the mesh network based on the plurality of path reply messages, wherein the updated condition information of the mesh network is indicative of a number of peer mesh nodes directly connected to the first mesh node, a number of additional root mesh nodes directly connected to the first mesh node, or both the number of directly connected peer mesh nodes and the number of directly connected additional root mesh nodes of the first mesh node; and
configuring the first mesh node with a non-root mesh node role or configuring the first mesh node to maintain the root mesh node role, wherein the configuration of the first mesh node with the non-root or root mesh node role is determined based on the updated condition information of the mesh network, wherein configuring the first mesh node with the non-root mesh node role or configuring the first mesh node to maintain the root mesh node role comprises implementing an adaptive root mesh configuration for the first mesh node; wherein the adaptive root mesh configuration causes the first mesh node to switch from the root mesh node role to the non-root mesh node role; and wherein, to switch from the root mesh node role to the non-root mesh node role, the first mesh node is configured to stop broadcasting the root announcement frame;
wherein the first mesh node is configured to maintain the root mesh node role based on determining at least one of:
the number of peer mesh nodes directly connected to the first mesh node is greater than a threshold value; and
the number of additional root mesh nodes directly connected to the first mesh node is zero.

10. The first mesh node of claim 9, wherein the adaptive root mesh configuration is determined based on the updated condition information, and wherein the adaptive root mesh configuration is indicative of the non-root mesh node role or the root mesh node role to be used by the first mesh node.

11. The first mesh node of claim 9, wherein:
the adaptive root mesh configuration causes the first mesh node to maintain the root mesh node role; and
to maintain the root mesh node role, the first mesh node is configured to continue generating and broadcasting the root announcement frame at the configured time interval.
